# EUROPÄISCHE PATENTSCHRIFT

(11) **EP 3 479 139 B1**
(45) Veröffentlichungstag und Bekanntmachung des Hinweises auf die Patenterteilung: **17.07.2024**
(21) Anmeldenummer: 17735098.0
(22) Anmeldetag: 03.07.2017
(51) Int. Cl.: G01S 11/02, G01S 3/04, G08G 1/16, G08G 1/00

(54) **VERFAHREN UND VORRICHTUNG ZUR BESTIMMUNG EINER DISTANZ ZWISCHEN EINEM FAHRZEUG UND EINER INFRASTRUKTUR-EINRICHTUNG**
METHOD AND APPARATUS FOR ESTABLISHING THE DISTANCE BETWEEN A VEHICLE AND AN INFRASTRUCTURE DEVICE
PROCÉDÉ ET DISPOSITIF DE DÉTERMINATION D'UNE DISTANCE ENTRE UN VÉHICULE ET UN ÉQUIPEMENT D'INFRASTRUCTURE

(30) Priorität: 04.07.2016 DE 102016212136
(43) Veröffentlichungstag der Anmeldung: 08.05.2019
(73) Patentinhaber: Molex CVS Hildesheim GmbH, 31135 Hildesheim (DE)
(72) Erfinder: NOSTHOFF, Michael, 90409 Nürnberg (DE); BAUER, Norbert, 90489 Nürnberg (DE); SEIBOTH, Thomas, 90489 Nürnberg (DE); NICKLES, Jochen, 90763 Fürth (DE); EL ASSAAD, Ahmad, 38448 Wolfsburg (DE)
(74) Vertreter: Ramrath, Lukas
(86) Internationale Anmeldenummer: PCT/EP2017/066415
(87) Internationale Veröffentlichungsnummer: WO 2018/007275

(56) Entgegenhaltungen:
- US-A1- 2010 033 339
- US-A1- 2014 056 099
- EI ASSAAD A ET AL: "Distance and vehicle speed estimation in OFDM multipath channels", 21 ST INTERNATIONAL CONFERENCE ON MICROWAVE, RADAR AND WIRELESS COMMUNICATIONS (MIKON,, 1 January 2016 (2016-01-01), XP002774277
- EL ASSAAD AHMAD ET AL: "Distance and vehicle speed estimation in OFDM multipath channels", 2016 21ST INTERNATIONAL CONFERENCE ON MICROWAVE, RADAR AND WIRELESS COMMUNICATIONS (MIKON), IEEE, 9 May 2016 (2016-05-09), pages 1 - 5, XP032912797, DOI: 10.1109/MIKON.2016.7491943

## Beschreibung

Die Erfindung betrifft ein Verfahren und eine Vorrichtung zur Bestimmung einer Distanz zwischen einem Fahrzeug und einer Infrastruktur-Einrichtung sowie ein Fahrzeug. Die Erfindung ermöglicht auch die Bestimmung der Fahrzeugposition relativ zu einem festen Ort.

Eine genaue Eigenlokalisierung für Fahrzeuge ist wünschenswert, um z.B. neue oder verbesserte Funktionalitäten in Fahrerassistenzsystemen zu ermöglichen. So kann es z.B. wünschenswert sein, eine fahrspurgenaue Fahrzeugnavigation durch ein Fahrerassistenzsystem zu ermöglichen.

Bekannt ist eine Positionsbestimmung des Fahrzeugs über sogenannte GNSS-Systeme. Allerdings reicht die Genauigkeit der Positionsbestimmung, insbesondere in Straßenschluchten und Städten, aufgrund der Verdeckung der notwendigen Satelliten nicht aus, um gewünschte Funktionalitäten zu realisieren.

Weiter bekannt sind sogenannte RF-basierte Verfahren zur Eigenlokalisierung von Fahrzeugen. Diese sind z.B. in der Druckschrift "F. Gustafsson et al., Mobile positioning using wireless networks: possibilities and fundamental limitations based on available wireless network Me..., Signal Processing Magazine, IEEE (2005), 41-53" beschrieben.

Weiter bekannt ist die nachveröffentlichte DE 10 2015 210 958.5. Diese offenbart eine Vorrichtung und ein Verfahren zur Bestimmung einer Fahrzeugposition in einem verkehrsknotenfesten Koordinatensystem. Die Vorrichtung umfasst mindestens eine Empfangseinrichtung zum Empfang eines Signals einer verkehrsknotigenseitigen Sendeeinrichtung, mindestens eine Einrichtung zur Bestimmung einer Fahrrichtungsinformation in einem globalen Referenzkoordinatensystem und mindestens eine Auswerteeinrichtung. Teil der Eigenpositionsbestimmung kann hierbei eine Bestimmung einer Distanz zwischen dem Fahrzeug und einer Infrastruktur-Einrichtung sein.

Die Druckschrift A. EI Assaad et al., "Distance and vehicle speed estimation in OFDM multipath channels", 2016 21 st International conference on microwave, radar and wireless communications (MIKON) (2016), 1-5 beschreibt ein Verfahren zur Bestimmung einer Distanz für eine Empfangseinrichtung.

Die US 2010/033339 A1 offenbart ein Positionierungssystem, welches zumindest einen Knoten nutzt, um eine Position einer mobilen Markierung zu verfolgen. Das System misst hierbei Laufzeiten.

Die US 2014/056099 A1 offenbart eine intravaskuläre Ultraschall-Bildgebung.

Es besteht das technische Problem, ein Verfahren und eine Vorrichtung zur Bestimmung einer Distanz zwischen einem Fahrzeug und einer Infrastruktur-Einrichtung sowie ein Fahrzeug zu schaffen, die eine hochgenaue Bestimmung der Distanz ermöglichen.

Die Lösung des technischen Problems ergibt sich durch die Gegenstände mit den Merkmalen der Ansprüche 1, 12 und 15. Weitere vorteilhafte Ausgestaltungen der Erfindung ergeben sich aus den Unteransprüchen.

Es ist eine Grundidee der Erfindung, Empfangssignale von mehreren fahrzeugseitigen Empfangseinrichtungen zu nutzen, um für jede Empfangseinrichtung eine Distanz zwischen dem Fahrzeug und der Infrastruktur-Einrichtung, die die empfangenen Signale aussendet, zu bestimmen. Hierbei umfassen die fahrzeugseitigen Empfangseinrichtungen jeweils mehrere Antennenelemente. Die Distanz wird dann als die minimalste Distanz aller empfangseinrichtungsspezifischen Distanzen bestimmt.

Vorgeschlagen wird ein Verfahren zur Bestimmung einer Distanz zwischen einem Fahrzeug und einer Infrastruktur-Einrichtung. Das Verfahren kann hierbei auch zur Bestimmung einer Fahrzeugposition in einem gewünschten Koordinatensystem, beispielsweise in einem globalen Referenzkoordinatensystem oder in einem verkehrsknotenfesten Koordinatensystem eines Verkehrsknotens dienen. Diese kann insbesondere eine Eigenpositionsbestimmung sein. Weiter ist es möglich, dass zusätzlich zur Distanz auch eine Geschwindigkeit des Fahrzeugs bestimmt wird.

Die Infrastruktur-Einrichtung kann hierbei eine in dem globalen Referenzkoordinatensystem ortsfest angeordnete Infrastruktur-Einrichtung bezeichnen. Diese kann beispielsweise eine verkehrsknotenseitige Sendeeinrichtung sein. Die Infrastruktur-Einrichtung kann auch als sogenannte roadside unit (RSU) bezeichnet werden. Die Infrastruktur-Einrichtung umfasst mindestens eine Sendeeinrichtung zum Aussenden von Signalen, die nachfolgend auch als Sendesignale bezeichnet werden. Zum Aussenden und Empfangen von Signalen kann die Infrastruktur-Einrichtung z.B. eine Antennenstruktur, insbesondere eine omnidirektionale Antennenstruktur, umfassen.

Weiter kann die Infrastruktur-Einrichtung auch eine Empfangseinrichtung für Signale umfassen.

Sendesignale können zur Informationsübertragung zwischen Infrastruktur-Einrichtung und dem Fahrzeug dienen. Beispielsweise können Nutzdaten mittels der Sendesignale übertragen werden. Auch können Informationen zur Position der Infrastruktureinrichtung in dem globalen Referenzkoordinatensystem übertragen werden. Auch können Informationen zu einem Zeitsystem der Infrastruktureinrichtung, insbesondere einer Sendezeit des Sendesignals in diesem Zeitsystem, übertragen werden.

Sendesignale können hierbei mit vorbestimmten Sendeparametern gesendet werden. Sendeparameter können insbesondere eine Sendefrequenz, eine Bandbreite und/oder eine Sendeleistung sein. Z.B. können Sendesignale mit einer Frequenz von 2.6 GHz und einer Bandbreite von 10 MHz gesendet werden.

Die von der Infrastruktur-Einrichtung gesendeten und gegebenenfalls auch empfangenen Signale können insbesondere sogenannte OFDM-Signale sein. Derartige Signale können insbesondere mittels des sogenannten Orthogonal Frequency-Division Multiplexing (OFDM)-Verfahrens erzeugt werden. Beispielsweise können die von der Infrastruktur-Einrichtung gesendeten Signale LTE-Signale sein. LTE-Signale (Long Term Evolution Signale) können einer Signalübertragung gemäß dem LTE-Mobilfunkstandard dienen. Die Erfindung ist hierbei jedoch nicht zwingend auf solche Signale beschränkt.

Über das von der Infrastruktur-Einrichtung gesendetes Signal (Sendesignal) kann insbesondere ein festgelegtes und somit vorbekanntes Referenzsymbol übertragen werden. Das Referenzsymbol kann hierbei eine festgelegte und somit vorbekannte Phasenlage, beispielsweise eine Phasenlage von 0°, aufweisen. Das Referenzsymbol kann von der Infrastruktur-Einrichtung periodisch übertragen werden. Ein Referenzsymbol kann in Form von oder durch komplexe Zahlen gegeben sein, z.B. durch die sog. In-Phase- und Quadraturdaten (IQ-Daten). Diese können speziell für die Synchronisation von Sender und Empfänger vorgesehen sein. Diese Zahlen können hierbei durch verschiedene Träger des Sendesignals übertragen werden, insbesondere zeitlich parallel. Hierbei ist davon auszugehen, dass das Referenzsymbol, insbesondere dessen Eigenschaften, einer fahrzeugseitigen Auswerteeinrichtung bekannt sind. Beispielsweise können diese in der Auswerteeinrichtung oder in einer weiteren fahrzeugseitigen Speichereinrichtung gespeichert sein. Somit kann das übertragene Referenzsymbol aus einem Empfangssignal bestimmt werden. Dies wird nachfolgend noch näher erläutert.

Weiter wird das von der Infrastruktur-Einrichtung gesendete Signal von mindestens zwei fahrzeugseitigen Empfangseinrichtungen empfangen. Hierbei umfasst jede fahrzeugseitige Empfangseinrichtung mindestens 2, vorzugsweise jedoch mehr als 2, insbesondere bis zu 4, 8 oder mehr Antennenelemente. Jedes Antennenelement einer Empfangseinrichtung empfängt hierbei das Sendesignal der Infrastruktur-Einrichtung und erzeugt ein Antennensignal (Empfangsantennensignal).

Jede Empfangseinrichtung kann somit eine Anordnung von mehreren Antennenelementen und/oder mehreren Arrays von Antennenelementen umfassen.

Die Empfangseinrichtung kann hierbei neben den Antennenelementen auch Elemente zur Signalverarbeitung umfassen. Beispielsweise kann eine Empfangseinrichtung mindestens eine A/D-Wandlereinrichtung, vorzugsweise jedoch eine A/D-Wandlereinrichtung pro Antennenelement, umfassen. Mittels einer solchen A/D-Wandlereinrichtung kann ein Antennensignal digitalisiert werden. Insbesondere kann eine digitalisierte In-Phasen-Komponente und eine digitalisierte Quadratur-Komponente eines Antennensignals erzeugt werden.

Wie nachfolgend noch näher erläutert, können die Antennenelemente einer Empfangseinrichtung jeweils als Flachantenne, Patchantenne oder eine sogenannte Panelantenne ausgebildet sein oder eine solche Antennenstruktur ausbilden. Hierbei können die mehreren Antennenelemente in einer Ebene oder im Wesentlichen in einer Ebene angeordnet sein.

Vorzugsweise können die Antennenelemente jeweils kreisförmig, d.h. äquidistant auf einer Kreislinie, angeordnet sein. Alternativ können die Antennenelemente einer Empfangseinrichtung linear, d.h. auf einer geraden Linie, angeordnet sein. Somit kann eine Empfangseinrichtung eine sogenannte UCA (uniform circular array)-Antennenstruktur umfassen. Alternativ können die Antennenelemente einer Empfangseinrichtung eine sogenannte ULA (uniform linear array)-Antennenstruktur umfassen.

Eine Empfangseinrichtung, insbesondere die Anordnung der mindestens zwei Antennenelemente der Empfangseinrichtung, kann hierbei im oder am Fahrzeug angeordnet sein. Insbesondere können hierbei die Antennenelemente einer oder aller Empfangseinrichtungen im oder am Fahrzeug verteilte Antennenelemente sein.

Die Antennenelemente, insbesondere die Antennenelemente einer Empfangseinrichtung, können hierbei insbesondere in oder an nicht-metallischen Elementen des Fahrzeugs angeordnet werden. Beispielsweise können die Antennenelemente in oder an Elementen einer Fahrzeugverkleidung angeordnet werden. Z.B. können Antennenelemente in oder an einer Front- oder Heck-Stoßstange angeordnet sein. Auch können Antennenelemente im oder am Fahrzeugdach angeordnet sein. Auch können Antennenelemente in einer Seiten- oder Türverkleidung angeordnet sein. Auch können Antennenelemente in oder an einer Scheibe, insbesondere einer Front- oder Heckscheibe, angeordnet sein.

Eine lineare Anordnung von Antennenelementen, insbesondere einer Empfangseinrichtung, kann hierbei derart im oder am Fahrzeug angeordnet werden, dass eine horizontale Antennenanordnung oder eine vertikale Antennenanordnung bereitgestellt wird. Bei einer horizontalen Antennenanordnung kann die gerade Linie, entlang derer die Antennenelemente angeordnet sind, parallel zu einer Ebene orientiert sein, wobei die Ebene senkrecht zur Fahrzeughochachse (Gierachse) orientiert ist. Bei einer vertikalen Antennenanordnung kann die Linie, entlang derer die Antennenelemente angeordnet sind, parallel oder im Wesentlichen parallel zu der Fahrzeughochachse angeordnet sein.

Die Verwendung von linear angeordneten Antennenelementen oder kreisförmig angeordneten Antennenelementen ermöglicht in vorteilhafter Weise die genaue Bestimmung einer Empfangsrichtung des Sendesignals, also einer Richtung, entlang derer sich das Sendesignal auf direktem Weg zur Empfangseinrichtung ausbreitet. Die kreisförmige Anordnung ermöglicht hierbei in vorteilhafter Weise sowohl eine Bestimmung eines Azimutwinkels als auch eines Elevationswinkels bezogen auf die Kreisebene. Die horizontale Antennenanordnung ermöglicht hierbei in vorteilhafter Weise die Bestimmung des Azimutwinkels, wobei die vertikale Antennenanordnung in vorteilhafter Weise die Bestimmung des Elevationswinkels ermöglicht.

Die Empfangsrichtung kann hierbei durch Azimut- und/oder Elevationswinkel charakterisiert werden.

Die Antennenelemente einer Empfangseinrichtung können insbesondere sogenannte Monopol-Antennenelemente sein.

In Abhängigkeit der Empfangsrichtung kann eine kürzeste Verbindungslinie zwischen der Empfangseinrichtung, z.B. einem Referenzpunkt der Empfangseinrichtung, und der Infrastruktur-Einrichtung, z.B. einem Referenzpunkt der Infrastruktur-Einrichtung, die auch als Sichtlinie (line of sight) bezeichnet werden kann, bestimmt werden.

Eine Position und/oder Orientierung einer Empfangseinrichtung in einem fahrzeugfesten Koordinatensystem kann hierbei vorbekannt sein. Dies ermöglicht in vorteilhafter Weise die Bestimmung der kürzesten Verbindungslinie zwischen einem fahrzeugfesten Referenzpunkt und der Infrastruktur-Einrichtung. Die zu bestimmende Distanz zwischen dem Fahrzeug und der Infrastruktur-Einrichtung kann hierbei die Distanz zwischen dem fahrzeugfesten Referenzpunkt und der Infrastruktur-Einrichtung sein.

Pro Empfangseinrichtung kann hierbei ein Datenübertragungskanal im Fahrzeug vorhanden oder bereitgestellt werden.

Für jede Empfangseinrichtung wird in Abhängigkeit der von den Antennenelementen erzeugten Antennensignale eine empfangseinrichtungsspezifische Distanz zwischen Fahrzeug und Infrastruktur-Einrichtung bestimmt. Es ist möglich, dass für verschiedene Empfangseinrichtungen verschiedene empfangseinrichtungsspezifische Distanzen bestimmt werden. Dies kann z.B. der Fall sein, wenn für eine oder mehrere Empfangseinrichtungen die kürzeste Verbindungslinie zwischen der Empfangseinrichtung und der Infrastruktur-Einrichtung durch mindestens ein Objekt, z.B. ein weiteres Fahrzeug oder ein Gebäude, verdeckt ist. Zwar kann die entsprechende Empfangseinrichtung, insbesondere aufgrund von Reflexionen, in diesem Fall auch das Sendesignal der Infrastruktur-Einrichtung empfangen, allerdings wird, insbesondere aufgrund der im Vergleich längeren Signallaufzeit, dann eine ungenaue Distanz bestimmt.

Weiter wird als Distanz die minimalste Distanz aller empfangseinrichtungsspezifischen Distanzen bestimmt. Hierdurch wird in vorteilhafter Weise sichergestellt, dass aufgrund von Signalreflexionen ungenau bestimmte Distanzen nicht als resultierende Distanz bestimmt werden.

Die Verwendung mehrerer Empfangseinrichtungen und die Bestimmung der minimalsten Distanz ermöglicht somit in vorteilhafter Weise eine hochgenaue Bestimmung der Distanz, wobei gleichzeitig eine große zeitliche Verfügbarkeit der Bestimmung ermöglicht wird.

Weiter ist es möglich, in Abhängigkeit der derart bestimmten Distanz und gegebenenfalls in Abhängigkeit der wie nachfolgend noch näher erläuterten Empfangsrichtung eines Sendesignals eine Position des Fahrzeugs im globalen Referenzkoordinatensystem zu bestimmen (Eigenpositionsbestimmung).

Die Eigenposition kann insbesondere in Abhängigkeit der Position der Infrastruktur-Einrichtung im globalen Referenzkoordinatensystem, der Distanz des Fahrzeugs zu dieser Infrastruktur-Einrichtung und der Empfangsrichtung des Sendesignals bestimmt werden, insbesondere von der fahrzeugseitigen Auswerteeinrichtung.

Hierbei kann die Position der Infrastruktur-Einrichtung vorbekannt sein, z.B. in der fahrzeugseitigen Auswerteeinrichtung oder einer fahrzeugseitigen Speichereinrichtung gespeichert sein. Auch können über das Sendesignal Informationen über die Position der Infrastruktur-Einrichtung im Referenzkoordinatensystem an die fahrzeugseitige Steuereinrichtung übertragen werden.

Weiter können Informationen über die Eigenposition des Fahrzeugs und gegebenenfalls auch eine Fahrzeuggeschwindigkeit vom Fahrzeug an eine externe Einrichtung übertragen werden. Dies kann dann z.B. in Abhängigkeit dieser Information einen Verkehrsfluss steuern.

Weiter werden die Antennensignale einer Empfangseinrichtung zumindest zeitweise mit einer ersten Abtastrate digitalisiert. Weiter wird ein Signalanfangsabschnitt jedes digitalisierten Antennensignals bestimmt. Der Signalanfangsabschnitt umfasst hierbei nur Abtastwerte, die durch Abtastung mit der ersten Abtastrate erzeugt werden. Weiter wird in Abhängigkeit der Signalanfangsabschnitte eine Empfangsrichtung des Signals bestimmt.

Insbesondere kann der MUSIC-Algorithmus durchgeführt werden, um die Empfangsrichtung des Signals zu bestimmen. Hierbei kann die Empfangsrichtung in Form eines Azimut- und/oder Elevationswinkels bestimmt werden. Der MUSIC-Algorithmus ist beispielsweise in der Druckschrift Wu Bo, "Realization and Simulation of DOA estimation using MUSIC Algorithm with Uniform Circular Arrays", Environmental Electromagnetics, The 2006 4th Asia-Pacific Conference (2006), 908-912 beschrieben. Das Verfahren zur Bestimmung des Azimutwinkels mit Hilfe des MUSIC-Algorithmus für eine ULA-Antenne ist beschrieben in der Druckschrift Schmidt, R.O., "Multiple emitter location and signal parameter estimation", Antennas and Propagation, IEEE Transactions, (1986), 276-280.

Selbstverständlich ist es auch möglich, andere Verfahren, die dem Fachmann bekannt sind, zur Bestimmung oder rechnerischen Schätzung der Empfangsrichtung benutzen.

Die Durchführung des MUSIC-Algorithmus für Antennensignale einer Empfangseinrichtung mit kreisförmig angeordneten Antennenelementen ist in der Druckschrift A. EI Assaad et al., "Distance and vehicle speed estimation in OFDM multipath channels", 2016 21st International conference on microwave, radar and wireless communications (MIKON) (2016), 1-5 beschrieben. Umfasst die Empfangseinrichtung beispielsweise N Antennenelemente und der Signalanfangsabschnitt M Abtastwerte, so wird die Empfangsrichtung aus N x M Abtastwerten bestimmt.

Zur Digitalisierung kann jede Empfangseinrichtung mindestens eine A/D-Wandlereinrichtung, vorzugsweise jedoch eine A/D-Wandlereinrichtung pro Antennenelement, umfassen. Die A/D-Wandlereinrichtung(en) können hierbei als sogenannte GSa/s-Wandlereinrichtungen bezeichnet werden. Diese können eine Abtastung mit einer Abtastrate im Bereich von 2 bis 4 Giga-Samples pro Sekunde ermöglichen.

Erfindungsgemäß detektiert die Empfangseinrichtung oder eine weitere Einrichtung, z.B. eine Auswerteeinrichtung, , wenn ein Sendesignal von der Infrastruktur-Einrichtung empfangen wird. Ab dem Detektionszeitpunkt, der ein Startzeitpunkt des Verfahrens sein kann, wird dann das von jedem Antennenelement empfangene Sendesignal (Empfangsantennensignal) mit der ersten Abtastrate digitalisiert. Ein Signalanfangsabschnitt umfasst alle Abtastwerte, die in einem Zeitintervall vorbestimmter Länge nach dem Detektionszeitpunkt oder Startzeitpunkt des Verfahrens erzeugt wurden. Alternativ umfasst der Signalanfangsabschnitt eine vorbestimmte Anzahl von Abtastwerten, z.B. 10 bis 100, vorzugsweise 20 bis 50, weiter vorzugsweise 30, Abtastwerte.

Ein digitalisiertes Antennensignal kann, wie vorhergehend bereits erläutert, in Form von einer digitalisierten In-Phase-Komponente und Quadratur-Komponente erzeugt werden.

Es kann davon ausgegangen werden, dass die Abtastwerte in dem Signalanfangsabschnitt nicht durch reflektierte Anteile des Sendesignals überlagert und somit verfälscht sind. Insbesondere kann davon ausgegangen werden, dass die Abtastwerte des Signalanfangsabschnitts aus einem Sendesignal erzeugt wurden, welches auf dem kürzesten Weg von der Infrastruktur-Einrichtung zu der Empfangseinrichtung übertragen wurde ("Line of sight"). Der kürzeste Weg kann insbesondere ein Weg entlang der vorhergehend erläuterten direkten Verbindungslinie (Sichtlinie) sein.

Wesentlich ist, dass nur eine begrenzte Anzahl von Abtastwerten nach dem Startzeitpunkt der Abtastung mit der ersten Abtastrate zur Bestimmung der Empfangsrichtung des Sendesignals genutzt wird. Die nicht mehr zum Signalanfangsabschnitt gehörenden Abtastwerte eines Antennensignals werden somit nicht zur Bestimmung der Empfangsrichtung genutzt. Allerdings können diese Abtastwerte für weitere Funktionen, beispielsweise zur Übertragung von Nutzdaten und, wie nachfolgend noch näher erläutert, zur Bestimmung der Distanz genutzt werden.

Hierdurch ergibt sich in vorteilhafter Weise eine möglichst genaue Bestimmung der Empfangsrichtung, die mit hoher Wahrscheinlichkeit der Richtung der direkten Verbindungslinie entspricht.

Hierzu ist es jedoch vorteilhaft, eine sehr hohe Abtastrate zu wählen, um zeitlich schnell einen genügend Abtastwerte umfassenden Signalanfangsabschnitt zu erzeugen, dessen Werte nicht durch Reflexionen verfälscht sind. Insbesondere kann die Abtastrate höher, beispielsweise sehr viel höher, als die zur verlustfreien Abtastung erforderlich Nyquist-Frequenz sein.

In einer weiteren Ausführungsform wird die Abtastrate reduziert, wenn eine vorbestimmte Zeitdauer nach Beginn der Abtastung mit der ersten Abtastrate vergangen ist und/oder wenn der Signalanfangsabschnitt mindestens eine vorbestimmte Anzahl an Abtastwerten umfasst. Mit anderen Worten wird die Abtastrate von der ersten Abtastrate auf eine weitere Abtastrate geändert, wobei die weitere Abtastrate niedriger ist als die erste Abtastrate. Dies erfolgt, wenn ein gewünschter Signalanfangsabschnitt bestimmt wurde. Hierdurch ergibt sich in vorteilhafter Weise, dass die zu übertragende und zu verarbeitende Datenmenge reduziert wird. Dies wiederum ermöglicht eine Verarbeitung mit weniger Rechenaufwand, wodurch die Verarbeitung auch beschleunigt werden kann.

In einer weiteren Ausführungsform wird aus den Antennensignalen, insbesondere den digitalisierten Antennensignalen, einer Empfangseinrichtung in Abhängigkeit der Empfangsrichtung ein empfangseinrichtungsspezifisches Sichtlinien-Signal bestimmt. Diese kann auch als Empfangssignal einer Empfangseinrichtung bezeichnet werden. Das empfangseinrichtungsspezifische Sichtlinien-Signal kann auch als LOS-Signal (line of sight-Signal) bezeichnet werden. Dies kann auch als räumliche Filterung bezeichnet werden.

Die räumliche Filterung, d.h. die Bestimmung des empfangseinrichtungsspezifischen Sichtlinien-Signals aus den Antennensignalen in Abhängigkeit der Empfangsrichtung ist ebenfalls in der Druckschrift A. EI Assaad et al., "Distance and vehicle speed estimation in OFDM multipath channels", 2016 21 st International conference on microwave, radar and wireless communications (MIKON) (2016), 1-5 beschrieben, insbesondere durch Formel 8 des Kapitels III.A und die zugehörige Herleitung. Bei der Bestimmung des Sichtliniensignals kann die Anzahl der von N digitalisierten Antennensignale auf ein digitalisiertes Signal, nämlich das empfangseinrichtungsspezifische Sichtlinien-Signal, reduziert werden.

Mit anderen Worten wird aus den Antennensignalen einer Empfangseinrichtung das Sichtlinien-Signal extrahiert.

Hierdurch ergibt sich in vorteilhafter Weise eine rechnerische Bestimmung eines Signals, welches direkt, d.h. insbesondere ohne Reflexionen, von der Infrastruktur-Einrichtung zur Empfangseinrichtung übertragen wurde und somit entlang des Weges mit der zu bestimmenden Distanz.

In einer weiteren Ausführungsform wird die empfangseinrichtungsspezifische Distanz in Abhängigkeit des empfangseinrichtungsspezifischen Sichtlinien-Signals bestimmt. Insbesondere kann die empfangseinrichtungsspezifische Distanz in Abhängigkeit der Laufzeit des Sichtlinien-Signals bestimmt werden. Hierzu kann die Laufzeit des Sichtlinien-Signals bestimmt werden. Hierdurch ergibt sich in vorteilhafter Weise eine zuverlässige und genaue Bestimmung der Distanz.

In einer weiteren Ausführungsform wird aus dem empfangseinrichtungsspezifischen Sichtlinien-Signal ein Datensymbol extrahiert, wobei die empfangseinrichtungsspezifische Distanz in Abhängigkeit des Datensymbols, insbesondere in Abhängigkeit von Eigenschaften des Datensymbols, bestimmt wird.

Das extrahierte Datensymbol kann hierbei dem übertragenen vorbekannten Referenzsymbol entsprechen. Das vorbekannte Referenzsymbol kann hierbei eine vorbekannten Position in einem Sendesignal bzw. in einem Datenstrom, aus dem das Sendesignal erzeugt wird, haben.

Das extrahierte Datensymbol kann somit dem mit der Signallaufzeit zwischen Infrastruktur-Einrichtung und Empfangseinrichtung übertragenen Referenzsymbol entsprechen. Insbesondere kann also die Signallaufzeit der Übertragung des Datensymbols bestimmt werden, wobei in Abhängigkeit dieser Laufzeit die Distanz bestimmt wird.

Durch die Signallaufzeit wird auch eine Phasenverschiebung zwischen Sendesignal und Empfangssignal erzeugt. Somit wird auch das Referenzsymbol phasenverschoben empfangen. Z.B. lässt sich die Laufzeit im Empfänger aus dem Phasenversatz zwischen der Phasenlage des extrahierten Datensymbols des Sichtlinien-Signals und der bekannten, z.B. unverschobenen, Phasenlage des Referenzsymbols bestimmen. Hierdurch ergibt sich in vorteilhafter Weise eine zuverlässige und genaue Bestimmung der Distanz.

In einer weiteren Ausführungsform wird das Datensymbol für verschiedene Phasenlagen eines Referenzsymbols mit dem Referenzsymbol korreliert. Das Referenzsymbol wurde hierbei vorhergehend erläutert. Weiter wird ein Phasenversatz zwischen dem Datensymbol und dem maximal korrelierenden Referenzsymbol bestimmt, wobei die Distanz in Abhängigkeit dieses Phasenversatzes bestimmt wird.

Hierbei kann angenommen werden, dass das Referenzsymbol sowie die Trägerfrequenzen vorbekannt sind, insbesondere einer fahrzeugseitigen Auswerteeinrichtung.

Das maximal korrelierende Referenzsymbol kann beispielsweise das Referenzsymbol mit einer Phasenlage sein, für die der Betrag eines Kreuz-Korrelationskoeffizienten der Korrelation zwischen Referenz- und Datensymbol maximal ist.

Es ist möglich, die Korrelation für verschiedene Signallaufzeiten bzw. verschiedene Phasenversatzwerte durchzuführen. Hierbei existiert ein vorbekannten Zusammenhang zwischen Signallaufzeit und Phasenversatz, insbesondere ein frequenzabhängiger Zusammenhang.

Die Signallaufzeiten bzw. Phasenversatzwerte, für die die Korrelation durchgeführt wird, können insbesondere in Abhängigkeit einer GNSS-Ungenauigkeit bestimmt werden. Ist beispielsweise bekannt, dass eine aktuelle GNSS-Ungenauigkeit einem bestimmten Wert, beispielsweise 50 m, entspricht, so können das Intervall für die Signallaufzeiten bzw. Phasenversatzwerte derart bestimmt werden, dass eine Distanzbestimmung mit einer höheren Genauigkeit als die der aktuellen GNSS-Ungenauigkeit ermöglicht wird. Die GNSS-Ungenauigkeit kann eine Ungenauigkeit bei der Positionsbestimmung des Fahrzeugs mit diesem GNSS-Sensor des Fahrzeugs sein. Diese kann bestimmbar sein, z.B. durch die Auswerteeinrichtung.

Der Phasenversatz zwischen der vorab bekannten Phasenlage des Referenzsymbols und der über die Korrelation bestimmten Phasenlage kann hierbei aufgrund eines Zeitversatzes zwischen dem Sendezeitpunkt des Referenzsymbols durch die Infrastruktur-Einrichtung und dem Empfangszeitpunkt des Referenzsymbols durch die Empfangseinrichtung bedingt sein. Dieser Zeitversatz, der in Abhängigkeit des Phasenversatzes bestimmt werden kann, kann einer Signallaufzeit des Sendesignals, insbesondere des Referenzsymbols, entlang der Sichtlinie entsprechen. In Abhängigkeit der Signallaufzeit kann dann die Distanz zwischen Empfangseinrichtung und Infrastruktur-Einrichtung bestimmt werden, insbesondere als Produkt aus Signallaufzeit und der Lichtgeschwindigkeit.

Die Bestimmung der Distanz kann hierbei durch Ausführung eines sogenannten ML-Algorithmus erfolgen, der z.B. in Kapitel III.B. der Druckschrift A. EI Assaad et al., "Distance and vehicle speed estimation in OFDM multipath channels", 2016 21 st International conference on microwave, radar and wireless communications (MIKON) (2016), 1-5 beschrieben ist. Es wird hinsichtlich der Bestimmung der empfangseinrichtungsspezifischen Distanz, insbesondere hinsichtlich der Bestimmung der empfangseinrichtungsspezifischen Empfangsrichtung des Signals, der räumlichen Filterung, der Bestimmung der empfangseinrichtungsspezifischen Fahrzeuggeschwindigkeit, vollumfänglich Bezug auf diese Druckschrift genommen. Hierdurch ergibt sich in vorteilhafter Weise eine genaue und rechentechnisch einfach zu implementierende, insbesondere zeitlich schnell durchführbare, Bestimmung der Distanz. In einer weiteren Ausführungsform wird eine Fahrzeuggeschwindigkeit in Abhängigkeit von mindestens zwei zeitlich nacheinander bestimmten Distanzen bestimmt. Insbesondere kann die Fahrzeuggeschwindigkeit in Abhängigkeit von zwei zeitlich unmittelbar aufeinander folgend bestimmten Distanzen bestimmt werden. Beispielsweise kann die Fahrzeuggeschwindigkeit bestimmt werden, indem eine Differenz der zeitlich nacheinander bestimmten Distanzen bestimmt wird und diese Differenz durch die Zeitdauer zwischen der Bestimmung geteilt wird. Die Zeitdauer zwischen der Bestimmung kann in Abhängigkeit einer Periodenzeit des Sendens des Referenzsymbols durch die Infrastruktur-Einrichtung bestimmt werden. Insbesondere kann die Fahrzeuggeschwindigkeit bestimmt werden, wenn die zeitlich nacheinander bestimmten minimalsten Distanzen jeweils empfangseinrichtungsspezifische Distanzen derselben Empfangseinrichtung sind, wobei die Fahrzeuggeschwindigkeit dann in Abhängigkeit dieser Distanzen bestimmt wird.

Hierdurch ergibt sich in vorteilhafte Weise eine einfache, jedoch genaue Bestimmung der Fahrzeuggeschwindigkeit.

In einer weiteren Ausführungsform wird die Fahrzeuggeschwindigkeit zusätzlich in Abhängigkeit der Empfangsrichtung bestimmt. Diese kann insbesondere bestimmt werden, wenn das Sichtlinien-Signal vorhanden ist. Dies ist in Formel 16 des Kapitels III.B. der Druckschrift A. EI Assaad et al., "Distance and vehicle speed estimation in OFDM multipath channels", 2016 21 st International conference on microwave, radar and wireless communications (MIKON) (2016), 1-5 beschrieben.

Insbesondere ist es möglich, dass die zeitlich nacheinander bestimmten Distanzen die empfangseinrichtungsspezifischen Distanzen verschiedener Empfangseinrichtungen sind. In diesem Fall können die Distanzen in einem gemeinsamen Referenzkoordinatensystem bestimmt werden, insbesondere im Fahrzeugkoordinatensystem.

In einer weiteren Ausführungsform werden die Antennensignale oder die digitalisierten Antennensignale über eine UHDR-Signalübertragungsleitung (Ultra High Data Rate-Signalübertragungsleitung) übertragen. Die UHDR-Signalübertragungsleitung kann eine Signalübertragungsleitung des Fahrzeugs sein. Insbesondere kann die UHDR-Signalübertragungsleitung eine optische Übertragung von Signalen ermöglichen. Weiter kann die UHDR-Signalübertragungsleitung eine Übertragung mit einer Übertragungsrate in einem Bereich von 12 bis 20 Gbit/s ermöglichen. Beispielsweise kann die UHDR-Signalübertragungsleitung eine sogenannte Thunderbolt-Übertragungsleitung sein. Beispielsweise können die Empfangseinrichtungen über jeweils eine UHDR-Signalübertragungsleitung mit einer Auswerteeinrichtung signaltechnisch verbunden sein. Dies ermöglicht in vorteilhafter Weise die Übertragung von insbesondere digitalisierten Antennensignalen, die mit einer hohen Abtastrate, z.B. mit der ersten Abtastrate, erzeugt wurden. Insbesondere zu Beginn der Distanzbestimmung kann ein Antennensignal zur Erzeugung des Signalanfangsabschnitts mit einer im Vergleich sehr hohen Abtastrate abgetastet werden.

Somit ergibt sich in vorteilhafter Weise eine zuverlässige Bestimmung der Distanz, da die Übertragungskapazität ausreicht, um die Distanzbestimmung zu ermöglichen.

In einer weiteren Ausführungsform werden für jedes Antennenelement einer fahrzeugseitigen Empfangseinrichtung die Antennensignale vor der Übertragung an eine fahrzeugseitige Auswerteeinrichtung digitalisiert. Mit anderen Worten werden die Antennensignale nicht in oder durch die Auswerteeinrichtung, sondern empfangseinrichtungsseitig digitalisiert. Dies ermöglicht in vorteilhafter Weise eine nicht verlust-/dämpfungsbehaftete Übertragung der Signale zwischen Empfangseinrichtung und Auswerteeinrichtung im Fahrzeug. Bei analoger Übertragung (z.B. Koaxialkabel) könnten Signalverluste durch Dämpfung und Störungen auftreten, die z.B. mit zusätzlicher Hardware (z.B. Leitungsverstärker) kompensiert werden müssten. Für digital übertragene Signale existieren in vorteilhafter Weise digitale Signalverarbeitungs- und Fehlerkorrekturalgorithmen, die die Kompensationsmaßnahmen für analoge Signale nicht erforderlich machen.

In einer weiteren Ausführungsform unterbricht die Infrastruktur-Einrichtung das Senden des Signals für eine vorbestimmte Zeitdauer. Die Unterbrechung, die auch als Sendepause bezeichnet werden kann, wird von einer fahrzeugseitigen Auswerteeinrichtung detektiert. Die Bestimmung der Distanz wird nach Detektion der Unterbrechung durchgeführt, insbesondere begonnen. Somit wird die Unterbrechung des Sendens des Signals als Triggersignal für die Winkelschätzung genutzt. Die Unterbrechung kann somit auch als Triggersignal für die beschriebene Distanzbestimmung dienen. Insbesondere kann eine Signalflanke detektiert werden, die nach Beenden der Unterbrechung erzeugt wird. Beispielsweise kann das Senden des Signals für eine Zeitdauer von maximal 10 µs unterbrochen werden. Diese Sendeunterbrechungen können mit einer vorbestimmten Frequenz, beispielsweise einer Frequenz von 10 Hz, durchgeführt werden. Die Unterbrechung kann hierbei während einer Signalübertragung zur Kommunikation der Infrastruktur-Einrichtung und der fahrzeugseitigen Auswerteeinrichtung erfolgen. Bisher ist eine Signalübertragung von OFDM-Signalen, insbesondere LTE-Signalen, eine kontinuierliche Signalübertragung. Bei üblichem Sendeverhalten von LTE-Basisstationen entstehen keine Sendepausen, die aber, wie vorhergehend beschrieben, für eine zuverlässige Winkelschätzung und somit auch Distanzbestimmung genutzt werden können.

Der Detektionszeitpunkt der Unterbrechung im Empfänger, z.B. durch die Auswerteeinrichtung, kann insbesondere der Startzeitpunkt für die Abtastung mit der ersten Abtastrate von z.B. 2 bis 4 Giga-Samples pro Sekunde sein.

Es ist somit möglich, nach Detektion der Unterbrechung die Abtastrate auf die vorhergehend erläuterte erste Abtastrate einzustellen. Weiter ist es möglich, nach Detektion der Unterbrechung den vorhergehend erläuterten Signalanfangsabschnitt zu bestimmen.Der Startzeitpunkt für die Abtastung mit der ersten Abtastrate muss jedoch nicht zwingend der Startzeitpunkt für die Erzeugung des Signalanfangsabschnitts sein. Somit ist es möglich, dass bereits während einer Sendepause mit einer hohen Abtastrate abgetastet wird, wobei jedoch der Signalanfangsabschnitt erst nach Beendigung der Sendepause erzeugt wird.

Die Unterbrechung des Sendens des Signals kann beispielsweise durch Ein- und Ausschalten einer Sendeeinrichtung der Infrastruktur-Einrichtung erfolgen. Auch ist es möglich, die Unterbrechung durch eine binäre Modulation des Sendesignals zu erzeugen, die eine im Vergleich zur Sendefrequenz niedrigere Modulationsfrequenz aufweist.

Wird eine Signalübertragung zur Kommunikation durchgeführt und das Senden des Signals unterbrochen, so können verlorene Signalanteile der Kommunikation durch eine entsprechende Fehlerbehandlung, beispielsweise eine Fehlerbehandlung bei der LTE-Kommunikation, rekonstruiert werden. Die Unterbrechungen sind somit künstliche Unterbrechungen, die insbesondere nicht anderweitig aufgrund des Übertragungsverfahrens bedingt sind.

Die Detektion der Unterbrechung ermöglicht in vorteilhafter Weise eine zuverlässige Winkelschätzung für die Lokalisierung und nach einer räumlichen Filterung eine genauere Bestimmung der Signallaufzeit, insbesondere im Nanosekunden-Bereich, zwischen Sender und Empfänger. Die Signallaufzeit kann insbesondere genauer bestimmt werden als mit Verfahren, die gemäß LTE-Standard implementiert sind und die Bestimmung der Genauigkeit im Bereich von ca. 1,5 us ermöglichen. Dadurch lässt sich auch auch die Distanz genauer bestimmen.

In einer weiteren Ausführungsform wird die Bestimmung der Distanz nur durchgeführt, falls eine Signalenergie der Antennensignale größer als ein vorbestimmter Schwellwert ist. Insbesondere wird, z.B. durch die fahrzeugseitige Auswerteeinrichtung, eine Signalenergie, beispielsweise in Form eines Signalpegels, bestimmt. Hierdurch kann in vorteilhafter Weise vermieden werden, dass Sendesignale von weiter entfernten Infrastruktur-Einrichtungen, beispielsweise Sendeeinrichtungen weiter entfernter Funkzellen, eine Bestimmung einer Distanz auslösen, insbesondere dann, wenn die nächstliegende Infrastruktur-Einrichtung das Senden des Signals unterbrochen hat.

In einer weiteren Ausführungsform wird für mehr als eine Empfangseinrichtung in Abhängigkeit der von den Antennenelementen erzeugten Antennensignale eine empfangseinrichtungsspezifische Signallaufzeit für die Distanz zwischen Fahrzeug und Infrastruktur-Einrichtung bestimmt. Weiter werden die empfangseinrichtungsspezifischen Signale der mehreren Empfangseinrichtungen, insbesondere die Empfangssignale oder die Sichtlinen-Signale, in Abhängigkeit der Signallaufzeiten in ein gemeinsames Zeitsystem transformiert. Insbesondere können die empfangseinrichtungsspezifischen Signale in ein Zeitsystem der Infrastruktur-Einrichtung transformiert werden. Auch können die empfangseinrichtungsspezifischen Signale in ein Referenzzeitsystem des Fahrzeugs transformiert werden. Hierdurch erfolgt in vorteilhafter Weise die Erzeugung mehrerer Signale mit gleichem Inhalt in einem gemeinsamen Zeitsystem. Dies wiederum ermöglicht in vorteilhafter Weise eine bessere Signalübertragungsqualität, beispielsweise durch Fusion der einzelnen empfangseinrichtungsspezifischen Signale.

In einer weiteren Ausführungsform erzeugt eine fahrzeugseitige Sendeeinrichtung ein Kalibrationssignal.

Die fahrzeugseitige Sendeeinrichtung kann hierbei mindestens ein Sendeantennenelement umfassen. Die fahrzeugseitige Sendeeinrichtung kann weiter in einer vorbekannten räumlichen Lage relativ zu den Empfangseinrichtungen angeordnet sein. Beispielsweise kann eine räumliche Lage der fahrzeugseitigen Sendeeinrichtung im Fahrzeugkoordinatensystem bekannt sein. Die fahrzeugseitige Sendeeinrichtung kann eine Antennenstruktur, insbesondere eine Nahfeld-Antenne, umfassen.

Das Kalibrationssignal kann mit zumindest teilweise gleichen Sendeparameter wie das Sendesignal der Infrastruktur-Einrichtung erzeugt werden, insbesondere mit der gleichen Sendefrequenz und/oder gleichen Bandbreite. Vorzugsweise ist jedoch eine Sendeleistung des Kalibrationssignals geringer als die Sendeleistung des Sendesignals, vorzugweise geringer als 70 dBm.

Über das Kalibrationssignal kann das erläuterte Referenzsymbol übertragen werden.

Weiter empfängt mindestens eine fahrzeugseitige Empfangseinrichtung das Kalibrationssignal. Insbesondere kann jedes Antennenelement der fahrzeugseitigen Empfangseinrichtung das Kalibrationssignal empfangen.

Das Kalibrationssignal kann hierbei digitalisiert werden, insbesondere mit der erläuterten ersten Abtastrate, weiter insbesondere durch die A/D-Wandlereinrichtungen zur Digitalisierung der Empfangssignale.

Weiter wird in Abhängigkeit mindestens einer Signaleigenschaft des von den Antennenelementen empfangenen Kalibrationssignals für mindestens ein Antennenelement, vorzugsweise für jedes Antennenelement, der mindestens einen Empfangseinrichtung mindestens ein Signalkorrekturfaktor bestimmt. Der Signalkorrekturfaktor kann hierbei weiter in Abhängigkeit der vorbekannten räumlichen Lage der fahrzeugseitigen Sendeeinrichtung und/oder von vorbekannten (Sende-)Eigenschaften des Kalibrationssignals bestimmt werden.

Als Signalkorrekturfaktor kann/können insbesondere ein Faktor zur Korrektur der Amplitudendrift und/oder ein Faktor zu Korrektur der Phasendrift eines von einem Antennenelement empfangenen Signals bestimmt werden. Eine Amplituden- und/oder Phasendrift kann insbesondere durch Eigenschaften der analogen Signalübertragungsstrecke von den Antennenelementen zu den A/D-Wandlereinrichtungen bedingt sein, z.B. durch Temperaturschwankungen und/oder mechanische Erschütterungen.

Weiter wird ein Antennensignal oder ein digitalisiertes Antennensignal in Abhängigkeit des mindestens einen Signalkorrekturfaktors korrigiert. Dies kann bedeuten, dass das Antennensignal in Abhängigkeit des Signalkorrekturfaktors verändert oder verarbeitet wird.

Somit kann für die mindestens eine Empfangseinrichtung die empfangseinrichtungsspezifische Distanz zwischen Fahrzeug und Infrastruktur-Einrichtung in Abhängigkeit des korrigierten Antennensignals bestimmt werden. Dies ermöglicht in vorteilhafter Weise eine genauere Bestimmung der Distanz.

Insbesondere kann für jedes Antennenelement mindestens eine Signaleigenschaft, beispielsweise eine Phasenlage und/oder eine Amplitude, des empfangenen Kalibrationssignals bestimmt werden. Die Phasenlage kann hierbei, wie vorhergehend erläutert, bestimmt werden, indem das übertragene Referenzsymbol im empfangenen Kalibrationssignal bestimmt wird und für verschiedenen Phasenlagen mit einem entsprechend der jeweiligen Phasenlage phasenverschobenen Referenzsymbol korreliert wird.

Die Signaleigenschaft kann dann mit einer Soll-Signaleigenschaft verglichen werden, wobei die Soll-Signaleigenschaft in Abhängigkeit der vorbekannten räumlichen Anordnung der fahrzeugseitigen Sendeeinrichtung und/oder den vorbekannten Eigenschaften des Kalibrationssignals bestimmt werden kann. Weiter kann der mindestens eine Signalkorrekturfaktor derart bestimmt werden, dass die mindestens eine Signaleigenschaft der Soll-Eigenschaft entspricht oder nicht mehr als ein vorbestimmtes Maß davon abweicht.

Die Signaleigenschaft kann eine absolute Signaleigenschaft oder eine relative Signaleigenschaft sein. Eine relative Signaleigenschaft kann insbesondere eine Signaleigenschaft des von einem Antennenelement empfangenen Kalibrationssignals relativ zur Signaleigenschaft des von mindestens einem weiteren Antennenelement empfangenen Kalibrationssignals sein, z.B. eine Differenz zwischen diesen Signaleigenschaften.

Es ist möglich, die fahrzeugseitige Sendeeinrichtung mit der gleichen räumlichen Distanz zu allen Antennenelementen einer Empfangseinrichtung anzuordnen, beispielsweise im Zentrum einer Empfangseinrichtung mit kreisförmig angeordneten Antennenelementen. In diesem Fall sollten die Signaleigenschaften des von jedem Antennenelement empfangenen Kalibrationssignals gleich sein, insbesondere eine Phasenlage und/oder eine Amplitude. Somit kann der mindestens eine Signalkorrekturfaktor derart bestimmt werden, dass die Signaleigenschaften des von jedem Antennenelement empfangenen Kalibrationssignals gleich sind oder nicht mehr als ein vorbestimmtes Maß voneinander abweichen.

Der mindestens eine Signalkorrekturfaktor kann insbesondere in einer Sendepause des Sendesignals bestimmt werden, wobei die Antennensignale oder digitalisierte Antennensignale, die nach dieser Sendepause empfangen werden, dann in Abhängigkeit des mindestens einen Signalkorrekturfaktors korrigiert werden können. Somit kann das Kalibrationssignal in der Sendepause erzeugt werden. Somit kann nach der Detektion der Unterbrechung des Sendesignals ein Kalibrationssignal erzeugt werden, wobei jedoch das Aussenden des Kalibrationssignals beendet wird, bevor die Unterbrechung des Sendesignals beendet wird. Dauert die Unterbrechung beispielsweise 10 µs, so kann 1 µs nach der Detektion der Unterbrechung für 1 bis 2 µs eine Kalibrationssignal gesendet werden.

Es ist möglich, dass das von von jedem Antennenelement empfangene Kalibrationssignal mit der ersten Abtastrate abgetastet wird.

Weiter vorgeschlagen wird eine Vorrichtung zur Bestimmung einer Distanz zwischen einem Fahrzeug und einer Infrastruktur-Einrichtung. Die Vorrichtung dient hierbei zur Durchführung eines Verfahrens gemäß einer der in dieser Offenbarung beschriebenen Ausführungsformen. Somit ist die Vorrichtung derart ausgebildet, dass ein solches Verfahren mittels der Vorrichtung ausführbar ist.

Die Vorrichtung umfasst mindestens zwei fahrzeugseitige Empfangseinrichtungen zum Empfang eines Signals der Infrastruktur-Einrichtung. Weiter umfasst jede fahrzeugseitige Empfangseinrichtung mindestens zwei Antennenelemente. Weiter umfasst die Vorrichtung mindestens eine fahrzeugseitige Auswerteeinrichtung. Die Auswerteeinrichtung kann im Fahrzeug angeordnet sein. Die Auswerteeinrichtung kann als Mikrocontroller oder FPGA ausgebildet sein oder einen solchen umfassen. Auch kann die Auswerteeinrichtung durch ein Steuergerät des Fahrzeugs bereitgestellt werden. Hierbei können die Empfangseinrichtungen und die Auswerteeinrichtung signaltechnisch verbunden sein. Weiter ist mittels der Auswerteeinrichtung für jede Empfangseinrichtung in Abhängigkeit der von den Antennenelementen der jeweiligen Empfangseinrichtung erzeugten Antennensignale eine empfangseinrichtungsspezifische Distanz zwischen Fahrzeug und Infrastruktur-Einrichtung bestimmbar, wobei als Distanz die minimalste Distanz aller empfangseinrichtungsspezifischen Distanzen bestimmt wird. Dies und entsprechende Vorteile wurden vorhergehend bereits erläutert.

In einer weiteren Ausführungsform sind die Antennenelemente einer fahrzeugseitigen Empfangseinrichtung kreisförmig oder linear angeordnet. Dies und entsprechende Vorteile wurden vorhergehend näher erläutert.

In einer weiteren Ausführungsform umfasst eine Empfangseinrichtung mindestens eine A/D-Wandlereinrichtung zur Digitalisierung der von den Antennenelementen erzeugten Antennensignale. Vorzugsweise umfasst die Empfangseinrichtung pro Antennenelement eine A/D-Wandlereinrichtung zur Digitalisierung des erzeugten Antennensignals. Dies und entsprechende Vorteile wurden vorhergehend bereits erläutert.

In einer weiteren Ausführungsform umfasst die Vorrichtung mindestens eine UHDR-Signalübertragungsleitung, wobei mindestens eine Empfangseinrichtung und die Auswerteeinrichtung über die mindestens eine UHDR-Signalübertragungsleitung signaltechnisch verbunden sind. Dies und entsprechende Vorteile wurden vorhergehend bereits erläutert.

In einer weiteren Ausführungsform umfasst die Vorrichtung mindestens eine fahrzeugseitige Sendeeinrichtung für ein Kalibrationssignal. Die fahrzeugseitige Sendeeinrichtung wurde vorhergehend bereits erläutert und ermöglicht in vorteilhafter Weise eine Kalibrierung der Vorrichtung, insbesondere durch Bestimmung mindestens eines Signalkorrekturfaktors.

Die fahrzeugseitige Sendeeinrichtung kann insbesondere in einer vorbekannten räumlichen Lage relativ zu einer Empfangseinrichtung, insbesondere zu den Antennenelementen einer Empfangseinrichtung, angeordnet sein. Insbesondere können die Antennenelemente einer Empfangseinrichtung kreisförmig angeordnet sein, wobei die fahrzeugseitige Sendeeinrichtung, insbesondere ein Sendeantennenelement der fahrzeugseitigen Sendeeinrichtung, im Zentrum (Mittelpunkt) der kreisförmigen Anordnung der Antennenelemente angeordnet sein kann.

Weiter vorgeschlagen wird ein Fahrzeug. Das Fahrzeug umfasst eine Vorrichtung gemäß einem der in dieser Offenbarung beschriebenen Ausführungsformen.

Weiter beschrieben wird eine Infrastruktur-Einrichtung zum Aussenden eines Signals, insbesondere eines OFDM- oder LTE-Signals, zur Bestimmung einer Distanz zwischen einem Fahrzeug und der Infrastruktur-Einrichtung. Weiter ist mittels der Infrastruktur-Einrichtung das Senden des Signals für eine vorbestimmte Zeitdauer unterbrechbar. Dies und entsprechende Vorteile wurden vorhergehend bereits erläutert.

Weiter beschrieben wird ein Computerprogrammprodukt, wobei in oder auf dem Computerprogrammprodukt ein Code zur Ausführung eines Verfahrens gemäß einer der in dieser Offenbarung beschriebenen Ausführungsformen gespeichert ist. Insbesondere kann das Computerprogrammprodukt ein Computerprogramm enthalten, welches Softwaremittel zur Durchführung eines entsprechenden Verfahrens aufweist, wenn das Computerprogramm in einem Automatisierungssystem ausgeführt wird.

Die Infrastruktur-Einrichtung und das Computerprogrammprodukt sind jeweils nicht als Erfindung beansprucht.

Die Erfindung wird anhand von Ausführungsbeispielen näher erläutert. Die Figuren zeigen:
- Fig. 1: ein schematisches Blockschaltbild einer erfindungsgemäßen Vorrichtung,
- Fig. 2: eine schematische Anordnung einer Infrastruktur-Einrichtung und mehreren Empfangseinrichtungen in einem Fahrzeug,
- Fig. 3: eine schematische Draufsicht auf ein Fahrzeug,
- Fig. 4: ein schematisches Blockschaltbild einer erfindungsgemäßen Vorrichtung in einer weiteren Ausführungsform,
- Fig. 5: ein schematisches Funktions-Blockschaltbild von Komponenten in einem Fahrzeug,
- Fig. 6: ein schematisches Flussdiagramm eines erfindungsgemäßen Verfahrens,
- Fig. 7: ein schematischer Zeitverlauf eines Sendesignals einer Infrastruktur-Einrichtung,
- Fig. 8: ein schematisches Funktions-Blockschaltbild,
- Fig. 9: eine schematische Darstellung einer UCA-Empfangseinrichtung,
- Fig. 10: eine schematische Draufsicht auf einen dedizierte Verkehrssituation einer Kreuzung,
- Fig. 11: ein schematisches Blockschaltbild einer erfindungsgemäßen Vorrichtung in einer weiteren Ausführungsform und
- Fig. 12: eine schematische Darstellung einer UCA-Empfangseinrichtung mit einer fahrzeugseitigen Sendeeinrichtung.

Nachfolgend bezeichnen gleiche Bezugszeichen Elemente mit gleichen oder ähnlichen technischen Merkmalen.

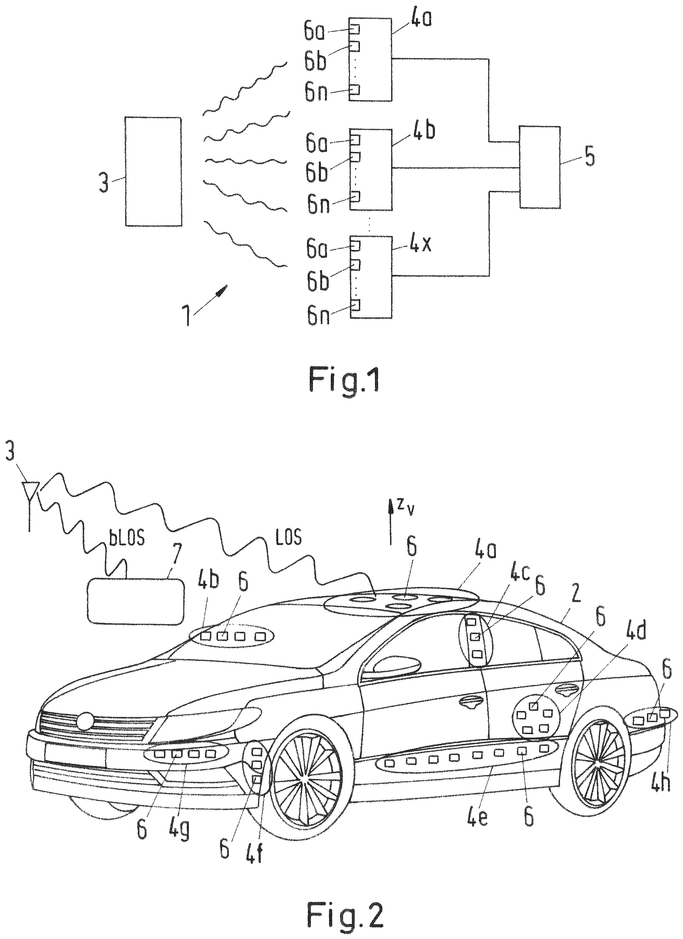

Fig. 1 zeigt ein Blockschaltbild einer erfindungsgemäßen Vorrichtung 1 zur Bestimmung einer Distanz zwischen einem Fahrzeug 2 (siehe z.B. Fig. 2) und einer Infrastruktur-Einrichtung 3. Die Infrastruktur-Einrichtung 3 kann beispielsweise eine Sende- und Empfangseinrichtung für OFDM-Signale, insbesondere LTE-Signale, sein. Beispielsweise kann die Infrastruktur-Einrichtung 3 ein Sendemast oder ein Teil davon sein.

Die Vorrichtung umfasst mehrere Empfangseinrichtungen 4a, 4b, ..., 4x und eine fahrzeugseitige Auswerteeinrichtung 5. Die Empfangseinrichtungen 4a, 4b, ..., 4x sind signaltechnisch mit der Auswerteeinrichtung 5 verbunden. Sowohl die Empfangseinrichtungen 4a, 4b, ..., 4x als auch die Auswerteeinrichtung 5 sind fahrzeugseitig angeordnet.

Jede Empfangseinrichtung 4a, 4b, ..., 4x umfasst n Antennenelemente 6a, 6b, ..., 6n, wobei n größer als 1 ist. Ein Sendesignal, welches von der Infrastruktur-Einrichtung 3 gesendet wird, wird von den Antennenelementen 6a, 6b, ..., 6n der Empfangseinrichtungen 4a, 4b, ..., 4x empfangen. Hierbei ist es möglich, dass nur einzelne oder alle Antennenelemente 6a, 6b, ..., 6n von einzelnen oder allen Empfangseinrichtungen 4a, 4b, ..., 4x das Sendesignal empfangen. Beispielsweise können einzelne oder alle Antennenelemente 6a, 6b, ..., 6n einer Empfangseinrichtung 4a, 4b, ..., 4x oder mehrerer Empfangseinrichtungen 4a, 4b, ..., 4x verdeckt sein, sodass das Sendesignal nicht oder nur mit einer ungewünschten Zeitverzögerung empfangen wird.

Die von den Antennenelementen 6a, 6b, ..., 6n bei Empfang des Sendesignals erzeugten Antennensignale werden von den Empfangseinrichtungen 4a, 4b, ..., 4x an die Auswerteeinrichtung 5 übertragen. Hierzu können die Antennensignale digitalisiert werden. Dies wird nachfolgend noch näher erläutert.

Mittels der Auswerteeinrichtung 5 kann in Abhängigkeit der Antennensignale eine empfangseinrichtungsspezifische Distanz d für jede der Empfangseinrichtungen 4a, 4b, ..., 4x, die Antennensignale an die Auswerteeinrichtung 5 überträgt, bestimmt werden.

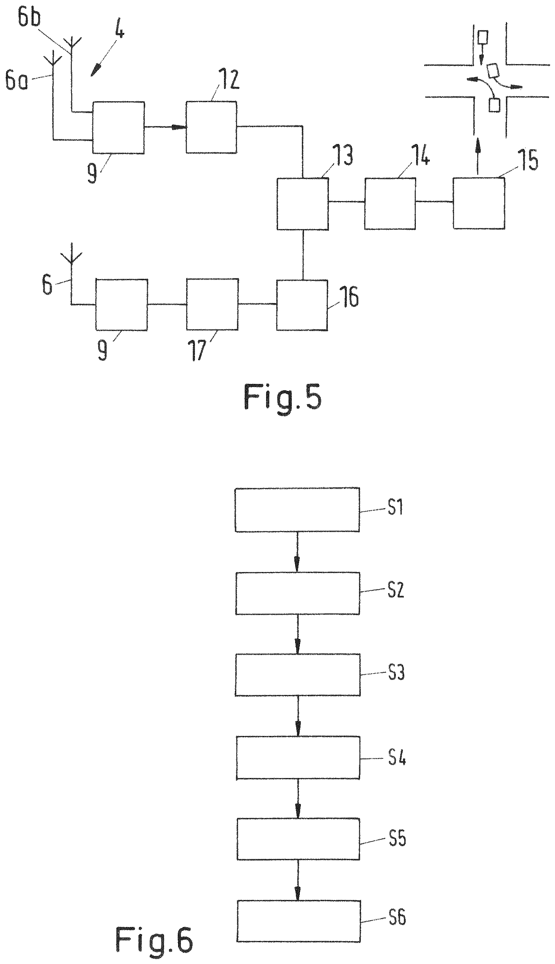

Hierzu kann die Auswerteinrichtung 5 beispielsweise das in Fig. 6 dargestellte Verfahren ausführen.

Weiter bestimmt die Auswerteeinrichtung als Distanz zwischen dem Fahrzeug 2 und der Infrastruktur-Einrichtung 3 die minimalste Distanz aller empfangseinrichtungsspezifischen Distanzen.

Z.B. ist es möglich, dass die empfangseinrichtungsspezifische Distanz zwischen Fahrzeug und Infrastruktur-Einrichtung in Abhängigkeit einer Distanz zwischen einem Referenzpunkt der Infrastruktur-Einrichtung 3 und einem Referenzpunkt der jeweiligen Empfangseinrichtung 4a, 4b, ..., 4x bestimmt wird. Der Referenzpunkt einer Empfangseinrichtung 4a, 4b, ..., 4x kann beispielsweise ein geometrischer Mittelpunkt der Antennenelemente 6a, 6b, ..., 6n sein. Weiter kann eine räumliche Lage des Referenzpunkts der Empfangseinrichtung 4a, 4b, ..., 4x in einem Fahrzeugkoordinatensystem des Fahrzeugs 2 vorbekannt sein. Ist dies der Fall, so kann als Distanz auch eine Distanz zwischen dem Referenzpunkt der Infrastruktur-Einrichtung 3 und einem Referenzpunkt des Fahrzeugs 2 bestimmt werden. Ist eine Position des Referenzpunkts der Infrastruktur-Einrichtung 3 in einem globalen Referenzkoordinatensystem bekannt, so kann auch die Position des Fahrzeugs 2 in diesem globalen Referenzkoordinatensystem bestimmt werden.

Die Antennenelemente 6a, 6b, ..., 6n sind vorzugsweise als sogenannte Patch-Antennen oder Streifen-Antennen ausgebildet.

Fig. 2 zeigt schematisch eine Anordnung einer Infrastruktureinrichtung 3 und eines Fahrzeugs 2 mit einer Vielzahl von Empfangseinrichtungen 4a, 4b, 4c, 4d, 4e, 4f, 4h.

Hierbei sind schematisch Antennenelemente 6, der einzelnen Empfangseinrichtungen dargestellt, wobei der Übersichtlichkeit halber nur ein Antennenelement 6 jeder Empfangseinrichtung 4a, ..., 4h mit einem Bezugszeichen versehen ist.

Das Fahrzeug 2 umfasst hierbei die Empfangseinrichtungen 4a, ..., 4h. Antennenelemente 6 der Empfangseinrichtungen 4a, ..., 4h sind hierbei vorzugsweise, jedoch nicht zwingend, in nicht-metallischen Teilen oder Elementen des Fahrzeugs 2, beispielsweise in einer Front-Stoßstange, in einer Heck-Stoßstange, einem Element einer Türverkleidung, in einer B-Säule oder in einem Fahrzeugdach oder in einer Frontscheibe angeordnet.

Weiter sind verschiedene Ausbildungen der Empfangseinrichtungen 4a, ..., 4h dargestellt. Die Antennenelemente 6 einer ersten Menge von Empfangseinrichtungen 4a, 4d sind kreisförmig angeordnet und bilden somit eine sogenannte UCA-Antennenstruktur. Hierbei sind Antennenelemente 6 entlang einer Kreislinie mit einem vorbestimmten Abstand zueinander angeordnet. Der vorbestimmte Abstand entlang der Kreislinie kann beispielsweise in einem Bereich von Lambda/2 (= halbe Wellenlänge des verwendeten Hochfrequenzsignals) liegen.

Die Antennenelemente 6 der weiteren Menge von verbleibenden Empfangseinrichtungen 4b, 4c, 4e, 4f, 4g, 4h sind linear angeordnet, d.h. entlang einer geraden Linie. Somit bilden die Antennenelemente 6 dieser Empfangseinrichtungen 4b, 4c, 4e, 4f, 4g, 4h sogenannte ULA-Antennenstrukturen.

Es ist dargestellt, dass die Antennenelemente 6 von einzelnen Empfangseinrichtungen 4b, 4e, 4g, 4h der weiteren Menge horizontale ULA-Antennenstrukturen ausbilden, wobei die Antennenelemente entlang einer Linie angeordnet sind, die parallel zu einer Ebene verläuft, wobei die Ebene senkrecht zu einer Fahrzeughochachse z (Gierachse) orientiert ist. Die Antennenelemente 6 der verbleibenden Empfangseinrichtungen 4c, 4f der weiteren Menge bilden jeweils eine sogenannte vertikale ULA-Antennenstruktur, wobei die Antennenelemente 6 entlang einer Linie angeordnet sind, die parallel zur Fahrzeughochachse z orientiert ist.

Die Antennenelemente der Empfangseinrichtungen 4b, 4c, 4e, 4f, 4g, 4h können hierbei mit einem vorbestimmten Abstand von Lambda/2 entlang der Linie angeordnet sein.

Dargestellt ist weiter eine Infrastruktur-Einrichtung 3, die schematisch dargestellten Signale LOS, bLOS aussendet. Weiter dargestellt ist, dass ein blockiertes Signal bLOS durch ein Objekt 7, beispielsweise ein weiteres Fahrzeug, blockiert wird und somit von keinem der Antennenelemente 6 der Empfangseinrichtungen 4a, ..., 4h empfangen werden kann. Ein unblockiertes Sendesignal LOS wird hierbei nicht blockiert und kann z.B. von den Antennenelementen 6 der Empfangseinrichtung 4a aber auch von Antennenelementen 6 weiterer Empfangseinrichtungen 4b, ..., 4h empfangen werden. Hierbei ist dargestellt, dass das Signal LOS ein sogenanntes Sichtlinien-Signal ist. Dies bedeutet, dass das empfangene Signal sich entlang einer geraden Verbindungslinie zwischen der Empfangseinrichtung 4a und der Infrastruktur-Einrichtung 3 ausbreiten kann.

Je nach Anordnung der Antennenelemente 6 der Empfangseinrichtungen 6 im Fahrzeug kann in Abhängigkeit der Antennensignale eine Empfangsrichtung des unblockierten Sendesignals LOS bestimmt werden. Die Empfangsrichtung kann hierbei in einem empfangseinrichtungsfesten oder -spezifischen Koordinatensystem bestimmt werden, beispielsweise im Koordinatensystem einer UCA-Antennenstruktur oder einer ULA-Antennenstruktur. Ist die Position und Orientierung der Antennenstrukturen der Empfangseinrichtungen 4a, ..., 4h im Fahrzeugkoordinatensystem bekannt, so kann eine Empfangsrichtung auch im Fahrzeugkoordinatensystem bestimmt werden.

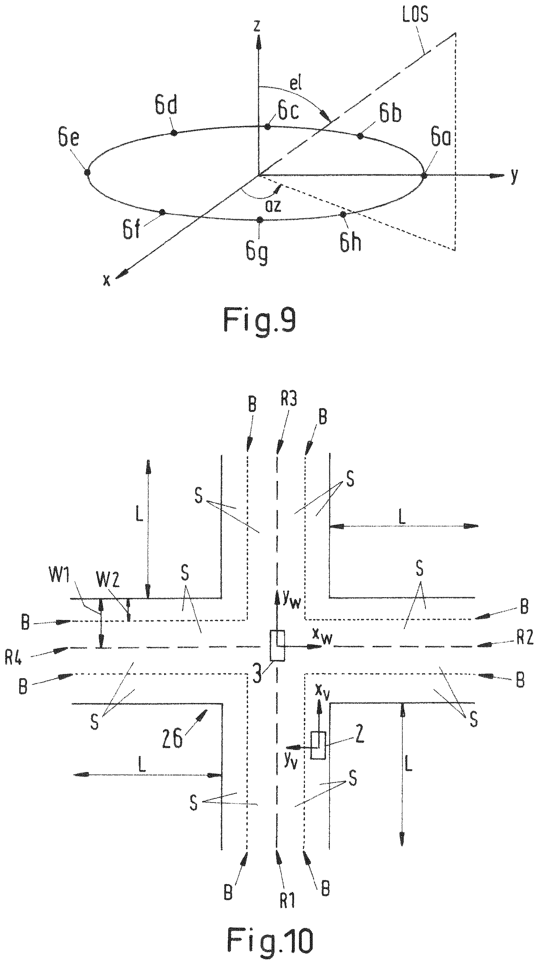

Insbesondere kann die Empfangsrichtung in Form eines Azimutwinkels az und eines Elevationswinkels el (siehe Fig. 9) bestimmt werden. In Fig. 9 ist dies bezüglich eines Koordinatensystems einer UCA-Antennenstruktur dargestellt. Selbstverständlich können diese Winkel jedoch auch im Fahrzeugkoordinatensystem bestimmt werden.

Hierbei ermöglichen die in Fig. 2 dargestellten vertikalen ULA-Antennenstrukturen in vorteilhafter Weise eine Bestimmung eines Elevationswinkels el und die horizontalen ULA-Antennenstrukturen die Bestimmung eines Azimutwinkels az. Die ULA-Antennenstruktur ermöglicht die Bestimmung beider Winkel el, az.

Im Fahrzeugkoordinatensystem kann beispielsweise der Azimutwinkel az in einer Ebene bestimmt werden, die von der Fahrzeuglängsachse und der Fahrzeugquerachse aufgespannt wird. Der Elevationswinkel kann als Winkel zwischen der Empfangsrichtung und der Fahrzeughochachse z bestimmt werden.

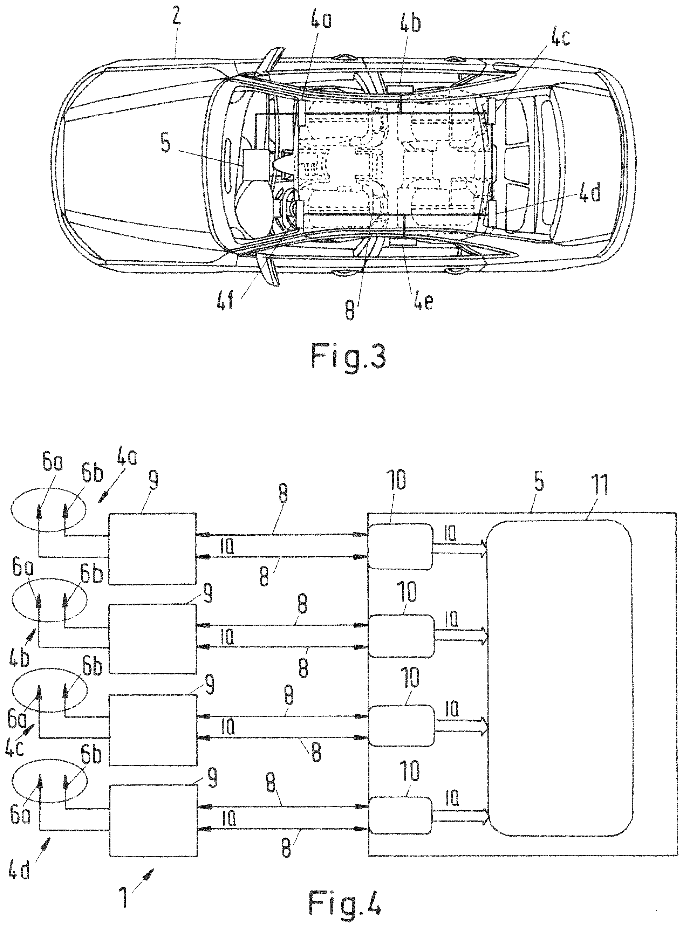

Fig. 3 zeigt eine schematische Draufsicht auf ein Fahrzeug 2. Das Fahrzeug 2 umfasst mehrere Empfangseinrichtungen 4a, 4b, 4c, 4d, 4e, 4f und eine Auswerteeinrichtung 5. Die Auswerteeinrichtung 5 kann hierbei einen Mikrocontroller umfassen oder als solcher ausgebildet sein. Auch kann die Auswerteeinrichtung 5 einen FPGA umfassen oder als solcher ausgebildet sein. Hierbei ist dargestellt, dass die Empfangseinrichtungen 4a, ..., 4f über eine UHDR-Signalübertragungsleitung 8 miteinander und mit der Auswerteeinrichtung 5 signaltechnisch verbunden sind. Die UHDR-Signalübertragungsleitung ermöglicht eine Signalübertragung mit bis zu 20 Gbit/s. Eine derartige Übertragungskapazität kann insbesondere dann notwendig sein, wenn die Antennensignale mit einer hohen Abtastrate digitalisiert werden. Dies kann insbesondere zur Bestimmung eines Signalanfangsabschnitts erforderlich sein, was nachfolgend noch näher erläutert wird.

Fig. 4 zeigt ein schematisches Blockschaltbild einer erfindungsgemäßen Vorrichtung in einer weiteren Ausführungsform. Die Vorrichtung 1 umfasst wiederum mehrere Empfangseinrichtungen 4a, 4b, 4c, 4d mit jeweils mehreren Antennenelementen 6a, 6b. Weiter umfassen die Empfangseinrichtungen 4a, 4b, 4c, 4d jeweils eine A/D-Wandlereinrichtung 9. Die A/D-Wandlereinrichtungen 9 sind hierbei als sogenannte GSa/s-A/D-Wandlereinrichtungen ausgebildet und ermöglichen eine Digitalisierung der analogen Empfangssignale mit einer Abtastrate von bis zu 2-4 GSamples pro Sekunde. Hierbei ist dargestellt, dass die Antennensignale aller Antennenelemente 6a, 6b einer Empfangseinrichtung 4a, ..., 4d von einer A/D-Wandlereinrichtung digitalisiert werden. Selbstverständlich ist es auch möglich, dass die Antennensignale der Antennenelemente jeweils von einer separaten A/D-Wandlereinrichtung digitalisiert werden.

Weiter ist es möglich, mittels der Empfangseinrichtungen 4a, insbesondere mittels der A/D-Wandlereinrichtungen 9, ein digitalisiertes Empfangssignal in Form eines In-Phasen-Anteils I und eines Quadratur-Anteils Q zu erzeugen. Diese Anteile I, Q werden dann über die in Fig. 3 dargestellte UHDR-Signalübertragungsleitung 8 an eine Auswerteeinrichtung 5 übertragen. Diese umfasst Schnittstellen 10 für die UHDR-Signalübertragungsleitungen 8. Weiter dargestellt ist eine Verarbeitungseinheit 11 der Auswerteeinrichtung 5, die eine Signalverarbeitung der übertragenen Anteile I, Q, also des übertragenen, digitalisierten Empfangssignals, vornimmt. Die Datenverarbeitung kann hierbei eine Datenmodulation, Demodulation und eine Datencodierung umfassen. Weiter kann durch die Datenverarbeitung die Bestimmung der Distanz erfolgen.

In Fig. 5 ist ein schematisches Funktions-Blockschaltbild dargestellt. Eine Empfangseinrichtung 4 empfängt Sendesignale einer Infrastruktur-Einrichtung 3 (siehe z.B. Fig. 1). Die Antennensignale der Antennenelemente 6a, 6b der Empfangseinrichtung 4 werden, insbesondere jeweils mittels einer A/D-Wandlereinrichtung 9 digitalisiert.

In einem weiteren Prozessschritt 12 erfolgt die Bestimmung einer empfangsspezifischen Distanz zwischen der Empfangseinrichtung 4 und der in Fig. 5 nicht dargestellten Infrastruktur-Einrichtung 3. Dies kann von der in Fig. 1 dargestellten Auswerteeinrichtung 5 durchgeführt werden. Weiter erfolgt in einem weiteren Prozessschritt 13 ein sogenanntes Framing, also ein Erzeugen von Datenströmen in einem gewünschten Format. In einem weiteren Prozessschritt 14 können Nutzdaten aus dem im Prozessschritt 13 erzeugten Datenstrom extrahiert werden. In einem weiteren Prozessschritt 15 können diese Nutzdaten für eine gewünschte Anwendung, beispielsweise eine Steuerung eines Fahrzeugassistenzsystems, genutzt werden. Weiter dargestellt ist, dass der im Prozessschritt 13 erzeugte Datenstrom oder Teile davon, insbesondere auch extrahierte Nutzsignale, vom Fahrzeug 2, wiederum an externe Einrichtungen, beispielsweise auch die Infrastruktur-Einrichtung 3 gesendet werden können. Hierzu kann in einem weiteren Prozessschritt 16 eine Datenmodulation und in einem weiteren Prozessschritt 17 eine sogenannte FDMA-Modulation erfolgen. Weiter kann, beispielsweise mittels der bereits erläuterten A/D-Wandlereinrichtung 9, die auch als D/A-Wandlereinrichtung genutzt werden kann, ein digitales Signal in ein analoges Signal umgewandelt und über ein Antennenelement 6 ausgesendet werden. So dient die verwendete Hardware gleichzeitig zur Lokalisierung als auch zur Datenübertragung. Beispielsweise kann auch die erfindungsgemäß bestimmte Distanz vom Fahrzeug 2 an die Infrastruktur-Einrichtung 3 übertragen werden.

Aus dem in Fig. 5 dargestellten funktionellen Blockschaltbild ergibt sich, dass das Sendesignal sowohl zur Bestimmung der Distanz als auch zur Übertragung von Nutzdaten genutzt werden kann. Dies bedeutet, dass das Sendesignal einerseits die Bestimmung der Distanz zwischen Fahrzeug 2 und Infrastruktur-Einrichtung 3 ermöglicht, gleichzeitig jedoch auch zur Übertragung von Nutzsignalen dient, die vom Fahrzeug 2, beispielsweise zur Steuerung eines Fahrzeugassistenzsystems, genutzt werden können.

In Fig. 6 ist ein schematisches Flussdiagramm eines erfindungsgemäßen Verfahrens zur Bestimmung einer Distanz zwischen einem Fahrzeug 2 und einer Infrastruktur-Einrichtung 3 (siehe z.B. Fig. 2) dargestellt.

In einem ersten Schritt S1 wird ein Startzeitpunkt des Verfahrens, also des Verfahrens der Distanzbestimmung mit Winkelschätzung und räumlichen Filterung, festgelegt oder detektiert. Das Senden des Sendesignals von der Infrastruktur-Einrichtung 3 kann hierbei, insbesondere periodisch, für eine vorbestimmte Zeitdauer unterbrochen werden. Mittels der Empfangseinrichtungen 4a, 4b, ..., 4x (siehe z.B. Fig. 1) können jedoch kontinuierlich Signale empfangbar sein. Wird eine Unterbrechung oder eine nach der Unterbrechung wieder erfolgende Signalübertragung des Sendesignals, also eine Sendepause, detektiert, so kann der Startzeitpunkt als der Zeitpunkt festgelegt werden, zu dem die nach einer Unterbrechung wieder erfolgende Signalübertragung detektiert wird. Eine Unterbrechung kann beispielsweise detektiert werden, wenn eine Signalleistung geringer als ein vorbestimmter Schwellwert ist. Eine nach der Unterbrechung wieder erfolgende Signalübertragung kann beispielsweise detektiert werden, wenn die Signalleistung, beispielsweise in Form eines Signalpegels, über einen vorbestimmten Schwellwert steigt. Auch kann der Detektionszeitpunkt der Zeitpunkt sein, zu dem eine ansteigende Signalpegelflanke detektiert wird.

Selbstverständlich sind jedoch auch andere Formen der Bestimmung oder Festlegung eines Startzeitpunktes der Distanzbestimmung möglich.

Zur Winkelschätzung und räumlichen Filterung zur Extraktion des Sichtlinien-Signals im Empfänger werden nach der Detektion der Sendeunterbrechung oder nach dem Startzeitpunkt des Verfahrens in einem zweiten Verfahrensschritt S2 die von den Antennenelementen 6a, 6b einer Empfangseinrichtung 4 empfangenen Antennensignale mit einer vorbestimmten ersten Abtastrate digitalisiert, die im Bereich von 2 bis 4 Giga-Samples/Sekunde liegt. Weiter wird ein Signalanfangsabschnitt jedes digitalisierten Antennensignals bestimmt. Der Signalanfangsabschnitt umfasst hierbei die Abtastwerte, die während einer vorbestimmten Zeitdauer nach dem Startzeitpunkt erzeugt wurden. Alternativ oder kumulativ kann der Signalanfangsabschnitt maximal eine vorbestimmte Anzahl von Abtastwerten umfassen. Der Signalanfangsabschnitt bezeichnet hierbei einen sogenannten Snapshot der digitalisierten Antennensignale.

Es ist möglich, jedoch nicht zwingend, dass die Abtastrate nach der Bestimmung oder Erzeugung des Signalanfangsabschnitts von der ersten Abtastrate auf eine weitere, niedrigere Abtastrate reduziert wird, die von der Signalbandbreite abhängig sein kann . Dies ist z.B. im LTE-Standard beschrieben.

Somit umfasst ein Signalanfangsabschnitt nicht alle Abtastwerte eines digitalisierten Antennensignals.

In einem dritten Schritt S3 wird in Abhängigkeit der Signalanfangsabschnitte eine Empfangsrichtung des Sendesignals bestimmt. Hierzu können die Signalanfangsabschnitte genutzt werden, die von den Antennenelementen 6 einer Empfangseinrichtung 4 oder von den Antennenelementen 6 mehrerer Empfangseinrichtungen 4 erzeugt wurden. Beispielsweise können zur Bestimmung der Empfangsrichtung die Signalanfangsabschnitte ausgewertet werden, die von Antennenelementen 6 einer UCA-Antennenstruktur erzeugt wurden. Dies ermöglicht in vorteilhafter Weise die Bestimmung sowohl eines Azimutwinkels az und eines Elevationswinkels el (siehe Fig. 9). Auch können die Signalanfangsabschnitte aller Antennenelemente 6 einer ULA-Antennenstruktur ausgewertet werden, um entweder einen Azimutwinkel az oder einen Elevationswinkel el zu bestimmen.

Die Bestimmung der Empfangsrichtung, insbesondere die Bestimmung eines Azimutwinkels az und eines Elevationswinkels el, in Abhängigkeit der Signalanfangsabschnitte ist exemplarisch für eine UCA-Antennenstruktur in Kapitel III.A. der Druckschrift A. EI Assaad et al., "Distance and vehicle speed estimation in OFDM multipath channels", 2016 21 st International conference on microwave, radar and wireless communications (MIKON) (2016), 1-5 beschrieben.

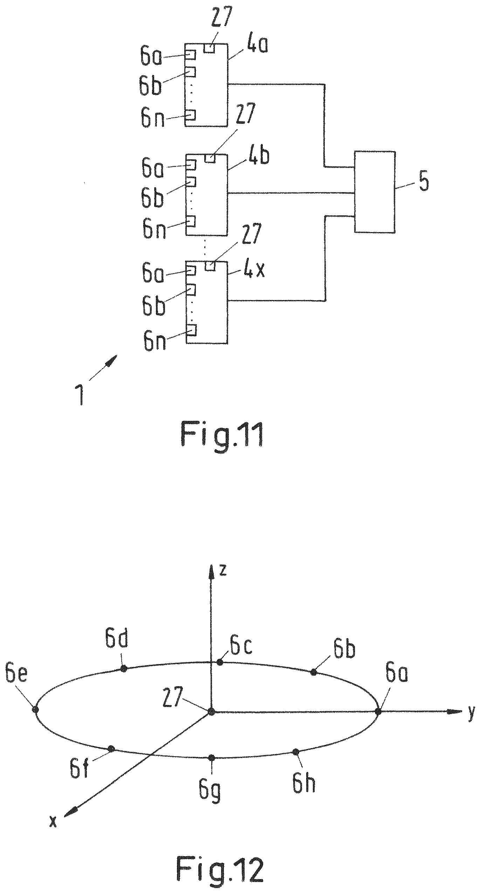

Zwischen dem zweiten Schritt S2 und dem dritten Schritt S3 kann eine Signalkorrektur des analogen oder digitalisierten Antennensignals in Abhängigkeit mindestens eines Signalkorrekturfaktors bestimmt werden. Dieser kann, wie nachfolgend noch näher erläutert, in Abhängigkeit eines Kalibrationssignals bestimmt werden, welches von einer fahrzeugseitigen Sendeeinrichtung 27 (siehe z.B. Fig. 11) ausgesendet wird.

Weiter ist in diesem Kapitel beschrieben, dass aus einem digitalisierten Antennensignal, also nicht mehr ausschließlich aus dem Signalanfangsabschnitt, einer Empfangseinrichtung 4 in Abhängigkeit der bereits bestimmten Empfangsrichtung in einem vierten Schritt S4 ein empfangseinrichtungsspezifisches Sichtlinien-Signal bestimmt werden kann. Im vierten Schritt S4 wird also rechnerisch ein Signal bestimmt, welches entlang einer geraden Verbindungslinie, also der Sichtlinie, von der Infrastruktur-Einrichtung 3 zu der jeweiligen Empfangseinrichtung 4 übertragen wurde. Dies kann auch als räumliche Filterung der Antennensignale bezeichnet werden.

In einem fünften Schritt S5 wird die empfangseinrichtungsspezifische Distanz in Abhängigkeit des im vierten Schritt S4 bestimmten empfangseinrichtungsspezifischen Sichtlinien-Signals bestimmt.

Im fünften Schritt S5 kann insbesondere ein Datensymbol aus dem empfangseinrichtungsspezifischen Sichtlinien-Signal extrahiert werden. Weiter kann dieses extrahierte Datensymbol für verschiedene Phasenlagen eines Referenzsymbols mit diesem Referenzsymbol korreliert werden. Das Referenzsymbol bezeichnet hierbei ein vorbekanntes, festgelegtes Symbol, welches von der Infrastruktur-Einrichtung 3 über das bzw. in dem Sendesignal übertragen wird. Das Referenzsymbol kann hierbei eine festgelegte, vorbekannte Phasenlage aufweisen. Weiter wird die Phasenlage bestimmt, für die die Korrelation zwischen dem Referenzsymbol und dem Datensymbol maximal ist. Weiter wird die Laufzeit des empfangseinrichtungsspezifischen Sichtlinien-Signals in Abhängigkeit des entsprechenden Phasenversatzes bestimmt. Weiter kann in Abhängigkeit dieser Laufzeit die Distanz zwischen Infrastruktur-Einrichtung 3 und Empfangseinrichtung 4 bestimmt werden.

Weiter kann im fünften Schritt S5 auch eine Fahrzeuggeschwindigkeit, insbesondere eine empfangseinrichtungsspezifische Fahrzeuggeschwindigkeit, bestimmt werden. Diese Fahrzeuggeschwindigkeit kann insbesondere in Abhängigkeit von mindestens zwei zeitlich nacheinander bestimmten, insbesondere empfangseinrichtungsspezifischen, Distanzen bestimmt werden.

Die Bestimmung der empfangseinrichtungsspezifischen Distanz als auch einer empfangseinrichtungsspezifischen Fahrzeuggeschwindigkeit ist hierbei in Kapitel III.B. der o.g. Druckschrift A. EI Assaad et al., "Distance and vehicle speed estimation in OFDM multipath channels", 2016 21 st International conference on microwave, radar and wireless communications (MIKON) (2016), 1-5 beschrieben.

Weiter wird im fünften Schritt S5 als resultierende Distanz die minimalste Distanz aller empfangseinrichtungsspezifischen Distanzen bestimmt. Vorstellbar ist es in diesem Fall auch, eine Fahrzeuggeschwindigkeit in Abhängigkeit von zwei aufeinanderfolgend bestimmten resultierenden Distanzen zu bestimmen.

In einem sechsten Schritt S6 kann das übertragene Sendesignal bzw. das digitalisierte Empfangssignal genutzt werden, um Nutzdaten zu extrahieren, beispielsweise Videodaten, Audiodaten oder Daten für weitere Anwendungen im Fahrzeug 2.

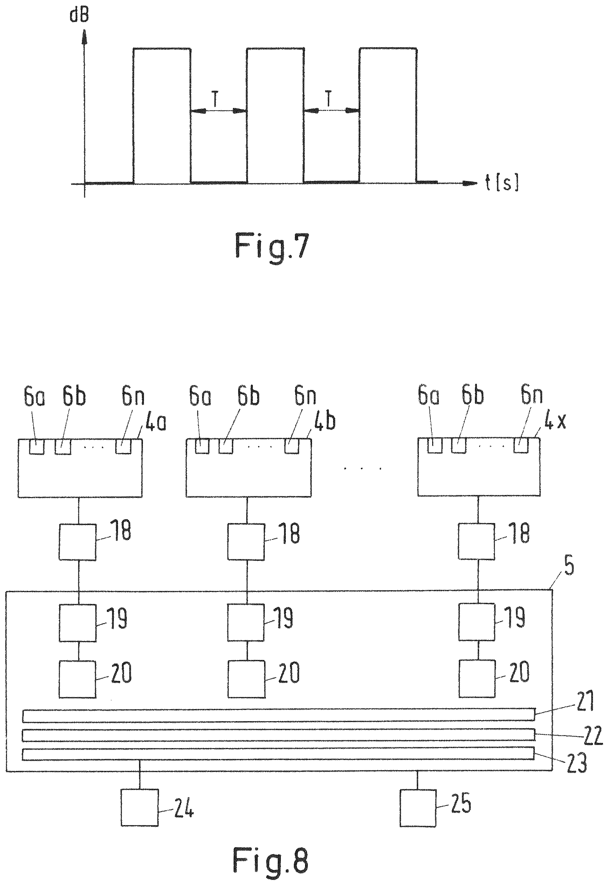

Fig. 7 zeigt einen schematischen zeitlichen Verlauf eines Sendesignals, welches von einer Infrastruktur-Einrichtung 3 ausgesendet werden kann. Hierbei ist dargestellt, dass das Senden des Signals periodisch unterbrochen wird, wobei eine Unterbrechung für eine vorbestimmte Zeitdauer T erfolgt. Die Zeitdauer T kann hierbei beispielsweise 10 µs betragen. Die Unterbrechung kann beispielsweise erfolgen, indem eine Sendeeinrichtung der Infrastruktur-Einrichtung 3 für die vorbestimmte Zeitdauer periodisch mit einer Frequenz grösser als 5 Hz deaktiviert bzw. moduliert wird.

Weiter ist dargestellt, dass eine Signalleistung während der Unterbrechung gering, insbesondere nahe 0, ist. Während einer existenten Signalübertragung ist die Signalleistung größer als ein vorbestimmter Schwellwert.

Hierbei ist es möglich, dass die fahrzeugseitige Auswerteeinrichtung 5 eine Unterbrechung, insbesondere die nach einer Unterbrechung wieder erfolgende Signalübertragung, detektiert, wobei der Detektionszeitpunkt als Startzeitpunkt (Triggerzeitpunkt) für das erfindungsgemäße Distanzbestimmungsverfahren dienen kann.

Fig. 8 zeigt ein schematisches Funktionsschaltbild der erfindungsgemäßen Lehre. Dargestellt sind mehrere Empfangseinrichtungen 4a, 4b, ..., 4x mit jeweils mehreren Antennenelementen 6a, 6b, ..., 6n. In einem Prozessschritt 18 werden die Empfangssignale, die von den Antennenelementen 6a, 6b, ..., 6n erzeugt werden, zumindest zeitweise mit der ersten Abtastrate digitalisiert und über eine UHDR-Signalübertragungsleitung 8 (siehe Fig. 4) an eine Auswerteeinrichtung 5 übertragen. Die Auswerteeinrichtung 5 bestimmt in einem weiteren Prozessschritt 19 eine empfangseinrichtungsspezifische Empfangsrichtung und ein empfangseinrichtungsspezifisches Sichtliniensignal. In einem weiteren Prozessschritt 20 wird für jede Empfangseinrichtung 4a, ..., 4x eine empfangseinrichtungsspezifische Laufzeit des empfangseinrichtungsspezifischen Sichtlinien-Signals bestimmt. In einem weiteren Prozessschritt 21 kann in Abhängigkeit der empfangseinrichtungsspezifischen Signallaufzeiten der empfangseinrichtungsspezifischen Sichtlinien-Signale eine zeitliche Synchronisierung der empfangseinrichtungsspezifischen Sichtlinien-Signale erfolgen. Insbesondere können alle empfangseinrichtungsspezifischen Sichtlinien-Signale in ein gemeinsames Zeitsystem, beispielsweise ein Zeitsystem der Infrastruktur-Einrichtung 3, transformiert werden.

In einem weiteren Prozessschritt 22 kann dann für jede Empfangseinrichtung 4a, 4b, ..., 4x eine empfangseinrichtungsspezifische Distanz und eine empfangseinrichtungsspezifische Fahrzeuggeschwindigkeit bestimmt werden.

In einem weiteren Prozessschritt 23 kann dann als resultierende Distanz die minimalste empfangseinrichtungsspezifische Distanz und als resultierende Fahrzeuggeschwindigkeit die Fahrzeuggeschwindigkeit bestimmt werden, die von der Empfangseinrichtung 4 ermittelt wird, die auch die minimalste empfangseinrichtungsspezifischste Distanz liefert. Weiter kann in dem weiteren Prozessschritt 23 die resultierende Distanz zur Bestimmung der Fahrzeugposition in einem globalen Referenzkoordinatensystem genutzt werden, insbesondere in dem eine Position der Infrastruktur-Einrichtung 3 in dem globalen Referenzsystem bekannt ist. Informationen über diese Position können beispielsweise von der Infrastruktur-Einrichtung 3 über Sendesignale an das Fahrzeug 2 übertragen werden, wobei diese Informationen als Nutzsignale aus dem Sendesignal extrahiert werden können. Neben den Informationen können selbstverständlich noch weitere Nutzsignale aus dem Sendesignal extrahiert werden.

Ist die Empfangseinrichtung und die Distanz bekannt, so kann die Fahrzeugposition in Abhängigkeit der Position der Infrastruktur-Einrichtung 3 im globalen Referenzkoordinatensystem ebenfalls im Referenzkoordinatensystem bestimmt werden. Somit kann in einem weiteren Prozessschritt 24 die Fahrzeugposition im globalen Referenzkoordinatensystem bestimmt werden. Weiter kann diese Information auch an die Infrastruktur-Einrichtung 3 übertragen werden. Dann kann die Information über die Fahrzeugposition im globalen Referenzkoordinatensystem über die InfrastrukturEinrichtung 3 an eine zentrale Steuereinrichtung übertragen werden, die in Abhängigkeit dieser Information einen Verkehrsfluss steuern kann bzw. entsprechende Steuersignale erzeugen und an Fahrzeuge und/oder Signalanlagen übertragen kann. Selbstverständlich können auch Informationen über die Fahrzeuggeschwindigkeit an die Infrastruktur-Einrichtung 3 und von dieser an eine zentrale Steuereinrichtung übertragen werden. In einem weiteren Prozessschritt 25 können weitere Nutzsignale aus dem Sendesignal extrahiert werden und für Anwendungen im Fahrzeug genutzt werden, beispielsweise für die Steuerung eines Fahrzeugassistenzsystems.

Somit wird also eine simultane Distanzbestimmung und Kommunikation ermöglicht.

Fig. 9 zeigt ein schematisches Schaubild einer UCA-Antennenstruktur mit Antennenelementen 6a, 6b, 6c, 6d, 6e, 6f, 6g, 6h. Weiter dargestellt ist, dass die Antennenelemente 6a, ..., 6h entlang einer Kreislinie angeordnet sind. Weiter dargestellt ist ein antennenstrukturspezifisches Koordinatensystem mit Raumachsen x, y, z und ein Azimutwinkel az sowie ein Elevationswinkel el. Weiter dargestellt ist ein Sichtliniensignal LOS, wobei der Azimutwinkel az einen Winkel zwischen der Längsachse x des Koordinatensystems und einer in eine von der Längsachse x und der Querachse y aufgespannte Ebene projizierte Linie des Sichtliniensignals LOS bezeichnet. Ein Elevationswinkel el bezeichnet den Winkel zwischen der vertikalen Raumachse z und dem Sichtliniensignal LOS.

Es ist selbstverständlich möglich, die im antennenstrukturspezifischen Koordinatensystem, welches auch als empfangseinrichtungsspezifisches Koordinatensystem bezeichnete werden kann, bestimmten Winkel az, el in ein Fahrzeugkoordinatensystem umzurechnen, wenn die Position und Orientierung des antennenstrukturspezifischen Koordinatensystems in dem Fahrzeugkoordinatensystem vorbekannt ist.

Fig. 10 zeigt eine schematische Draufsicht auf einen als Kreuzung ausgebildeten Verkehrsknoten 26. Die Kreuzung umfasst vier Zufahrten R1, R2, R3, R4 mit jeweils zwei Fahrbahnen B, wobei jede Fahrbahn B zwei Spuren S aufweist. Jede Fahrbahn B hat hierbei eine Breite W1. Jede Spur S hat eine Breite W2. Weiter dargestellt ist, dass die Zufahrten R1, ..., R4 jeweils Längen L aufweisen. Weiter dargestellt ist ein Fahrzeug 2, welches auf einer rechten Fahrspur S einer Fahrbahn B der ersten Zufahrt R1 fährt. Dargestellt ist ein Fahrzeugkoordinatensystem, insbesondere die Fahrzeuglängsachse x_{V} und die Fahrzeugquerachse yv. Eine Fahrzeughochachse z_{V} (siehe auch Fig. 2) ist hierbei senkrecht zu den verbleibenden Achsen xv, yv orientiert und weist auf den Betrachter zu.

Weiter dargestellt ist ein globales Referenzkoordinatensystem mit einer Längsachse x_{W} und einer Querachse yw. Eine nicht dargestellte Hochachse des globalen Referenzkoordinatensystems ist hierbei ebenfalls senkrecht zu den beiden verbleibenden Achsen x_{W}, y_{W} und auf den Betrachter zu orientiert. Weiter dargestellt ist eine Infrastruktur-Einrichtung 3, welche beispielsweise im Ursprung des globalen Referenzkoordinatensystems angeordnet sein kann. Das globale Koordinatensystem kann hierbei ein verkehrsknotenfestes Koordinatensystem sein.

Das Fahrzeug 2 kann eine Vorrichtung 1 zur Distanzbestimmung aufweisen. Mittels der Vorrichtung 1 kann, wie vorhergehend erläutert, eine Distanz zwischen dem Fahrzeug 2 und der Infrastruktur-Einrichtung 3 bestimmt werden. Wird in diesem Verfahren eine Empfangsrichtung eines Sichtlinien-Signals LOS bestimmt, so kann dann eine Position des Fahrzeugs 2 im globalen Referenzkoordinatensystem bestimmt werden. Diese Position und gegebenenfalls eine Fahrzeuggeschwindigkeit kann dann, insbesondere von einer nicht dargestellten zentralen Steuereinrichtung, genutzt werden, um einen Verkehrsfluss von Fahrzeugen im Bereich des Verkehrsknotens 26 zu steuern. Hierzu können entsprechende Steuersignale von der zentralen Steuereinrichtung erzeugt und an das jeweilige Fahrzeug 2 übertragen werden, beispielsweise über die Infrastruktur-Einrichtung 3.

Simulationen haben gezeigt, dass mittels des vorgeschlagenen Verfahrens ein mittlerer Fehler bei der Distanz unter 50cm und ein Azimutwinkel-Fehler unter 1 Grad , unabhängig von der Fahrzeuggeschwindigkeit bestimmt werden kann.

Fig. 11 zeigt ein schematisches Blockschaltbild einer erfindungsgemäßen Vorrichtung 1 in einer weiteren Ausführungsform. Im Unterschied zu der in Fig. 1 dargestellten Ausführungsform umfasst die Vorrichtung 1 hierbei pro fahrzeugseitiger Empfangseinrichtung 4a, 4b, ..., 4x eine fahrzeugseitige Sendeeinrichtung 27 zur Erzeugung eines Kalibrationssignals. In Fig. 11 ist dargestellt, dass diese fahrzeugseitigen Sendeeinrichtungen 27 jeweils Teil der Empfangseinrichtungen 4a, 4b, ...4x sind. Dies ist jedoch nicht zwingend. Auch ist es nicht zwingend, dass die Vorrichtung 1 pro fahrzeugseitiger Empfangseinrichtung 4a, 4b, ..., 4x jeweils eine fahrzeugseitige Sendeeinrichtung 27 zur Erzeugung eines Kalibrationssignals umfasst. Auch kann die Vorrichtung 1 nur eine einzige fahrzeugseitige Sendeeinrichtung 27 oder nur für ausgewählte, aber nicht alle, fahrzeugseitige Empfangseinrichtungen 4a, 4b, ..., 4x jeweils eine fahrzeugseitige Sendeeinrichtung 27 umfassen. Die fahrzeugseitigen Sendeeinrichtungen 27 können hierbei mit einer vorbekannten räumlichen Lage relativ zu den Antennenelementen 6 der fahrzeugseitigen Empfangseinrichtungen 4a, 4b,...,4x angeordnet sein.

Fig. 12 zeigt eine schematische Darstellung einer UCA-Empfangseinrichtung mit Antennenelementen 6a, 6b, 6c, 6d, 6e, 6f, 6g, 6h und mit einer fahrzeugseitigen Sendeeinrichtung 27. Im Unterschied zu der in Fig. 9 dargestellten Ausführungsform ist eine fahrzeugseitige Sendeeinrichtung 27 für eine Kalibrationssignal dargestellt, welches im Kreismittelpunkt des Kreises angeordnet ist, auf dessen Kreislinie die Antennenelemente 6a, 6b, 6c, 6d, 6e, 6f, 6g, 6h angeordnet sind.

Die in Fig. 11 und Fig. 12 dargestellten fahrzeugseitigen Sendeeinrichtungen 27 ermöglichen die Erzeugung eines Kalibrationssignals, welches dann durch die Antennenelemente 6, 6a, 6b, 6c, 6d, 6e, 6f, 6g, 6h der fahrzeugseitigen Empfangseinrichtungen 4a, 4b, ..., 4x empfangen werden kann.

Weiter kann in Abhängigkeit mindestens einer Signaleigenschaft des von den Antennenelementen 6, 6a, 6b, 6c, 6d, 6e, 6f, 6g, 6h empfangenen Kalibrationssignals für jedes Antennenelement 6, 6a, 6b, 6c, 6d, 6e, 6f, 6g, 6h einer Empfangseinrichtung 4a, 4b,..., 4x mindestens ein Signalkorrekturfaktor, z.B. eine Phasendrift- und ein Amplitudendriftkorrekturfaktor, bestimmt werden. Dieser Signalkorrekturfaktor kann hierbei insbesondere in Abhängigkeit der vorbekannten räumlichen Lage der fahrzeugseitigen Sendeeinrichtung und/oder von vorbekannten (Sende-)Eigenschaften des Kalibrationssignals bestimmt werden.

Weiter kann dann ein Antennensignal oder ein digitalisiertes Antennensignal, welches erzeugt wird, wenn ein Sendesignal der Infrastruktur-Einrichtung 3 empfangen wird, in Abhängigkeit des mindestens einen Signalkorrekturfaktors korrigiert werden.

### Bezugszeichenliste

- 1: Vorrichtung
- 2: Fahrzeug
- 3: Infrastruktur-Einrichtung
- 4, 4a, 4b, ..., 4x: fahrzeugseitige Empfangseinrichtung
- 5: fahrzeugseitige Auswerteeinrichtung
- 6, 6a, 6b, ..., 6n: Antennenelement
- 7: Objekt
- 8: UHDR-Signalübertragungsleitung
- 9: A/D-Wandlereinrichtung
- 10: Schnittstelle
- 11: Datenverarbeitungseinheit
- 12: Prozessschritt
- 13: Prozessschritt
- 14: Prozessschritt
- 15: Prozessschritt
- 16: Prozessschritt
- 17: Prozessschritt
- 18: Prozessschritt
- 19: Prozessschritt
- 20: Prozessschritt
- 21: Prozessschritt
- 22: Prozessschritt
- 23: Prozessschritt
- 24: Prozessschritt
- 25: Prozessschritt
- 26: Kreuzung
- 27: fahrzeugseitige Sendeeinrichtung
- S1: erster Schritt
- S2: zweiter Schritt
- S3: dritter Schritt
- S4: vierter Schritt
- S5: fünfter Schritt
- S6: sechster Schritt
- R1, R2, R3, R4: Zufahrt
- B: Fahrbahn
- S: Fahrspur
- W1: Breite einer Fahrbahn
- W2: Breite einer Fahrspur
- L: Länge
- x: Längsachse
- y: Querachse
- z: Hochachse
- x_{V}: Fahrzeuglängsachse
- y_{V}: Fahrzeugquerachse
- z_{V}: Fahrzeughochachse
- x_{W}: Längsachse des globalen Referenzkoordinatensystems
- y_{W}: Querachse des globalen Referenzkoordinatensystems
- LOS: Sichtlinien-Signal

## Patentansprüche

1. Verfahren zur Bestimmung einer Distanz zwischen einem Fahrzeug (2) und einer Infrastruktur-Einrichtung (3), wobei mindestens zwei fahrzeugseitige Empfangseinrichtungen (4, 4a, ..., 4x) ein von der Infrastruktur-Einrichtung (3) gesendetes Signal empfangen, wobei jede fahrzeugseitige Empfangseinrichtung (4, 4a, ..., 4x) mindestens zwei Antennenelemente (6, 6a, ..., 6n) umfasst, wobei mittels einer fahrzeugseitigen Auswerteeinrichtung (5) für jede fahrzeugseitige Empfangseinrichtung (4, 4a ..., 4x) in Abhängigkeit der von den Antennenelementen (6, 6a, ..., 6n) erzeugten Antennensignale eine empfangseinrichtungsspezifische Distanz zwischen Fahrzeug (2) und Infrastruktur-Einrichtung (3) bestimmt wird,
**dadurch gekennzeichnet, dass**
als Distanz zwischen dem Fahrzeug (2) und der Infrastruktur-Einrichtung (3) die minimalste Distanz aller empfangseinrichtungsspezifischen Distanzen bestimmt wird, wobei die fahrzeugseitige Empfangseinrichtung (4, 4a, ..., 4x) oder eine weitere Einrichtung detektiert, wenn das von der Infrastruktur-Einrichtung (3 gesendete Signal empfangen wird, wobei die von den Antennenelementen (6, 6a, ..., 6n) der fahrzeugseitigen Empfangseinrichtung (4, 4a, ..., 4x) erzeugten Antennensignale ab einem Detektionszeitpunkt zumindest zeitweise mit einer ersten Abtastrate digitalisiert werden, wobei ein Signalanfangsabschnitt jedes mit der ersten Abtastrate digitalisierten Antennensignals bestimmt wird, wobei der Signalanfangsabschnitt alle Abtastwerte umfasst, die in einem Zeitintervall vorbestimmter Länge nach dem Detektionszeitpunkt erzeugt wurden, oder wobei der Signalanfangsabschnitt eine vorbestimmte Anzahl von Abtastwerten umfasst, wobei in Abhängigkeit der Signalanfangsabschnitte eine Empfangsrichtung des Signals bestimmt wird.

2. Verfahren nach Anspruch 1, in welchem die Abtastrate reduziert wird, wenn eine vorbestimmte Zeitdauer nach Beginn der Abtastung mit der ersten Abtastrate vergangen ist.

3. Verfahren nach Anspruch 1 oder 2, in welchem aus den Antennensignalen einer fahrzeugseitigen Empfangseinrichtung (4, 4a, ..., 4x) in Abhängigkeit der Empfangsrichtung ein empfangseinrichtungsspezifisches Sichtlinien-Signal (LOS) bestimmt wird.

4. Verfahren nach Anspruch 3, in welchem die empfangseinrichtungsspezifische Distanz in Abhängigkeit des empfangseinrichtungsspezifischen Sichtlinien-Signals (LOS) bestimmt wird.

5. Verfahren nach Anspruch 4, in welchem aus dem empfangseinrichtungsspezifischen Sichtlinien-Signal (LOS) ein Datensymbol extrahiert wird, wobei die empfangseinrichtungsspezifische Distanz in Abhängigkeit des Datensymbols bestimmt wird.

6. Verfahren nach einem der vorangegangenen Ansprüche, in welchem eine Fahrzeuggeschwindigkeit in Abhängigkeit von mindestens zwei zeitlich nacheinander bestimmten Distanzen bestimmt wird.

7. Verfahren nach einem der vorangegangen Ansprüche, in welchem die Antennensignale oder die digitalisierten Antennensignale über eine UHDR-Signalübertragungsleitung (8) übertragen werden und/oder für jedes Antennenelement (6, 6a, ..., 6n) einer fahrzeugseitigen Empfangseinrichtung (4, 4a, ..., 4x) die Antennensignale vor einer Übertragung an die fahrzeugseitige Auswerteeinrichtung (5) digitalisiert werden.

8. Verfahren nach einem der vorangegangenen Ansprüche, in welchem die Infrastruktur-Einrichtung (3) das Senden des Signals für eine vorbestimmte Zeitdauer unterbricht, wobei die Unterbrechung von einer fahrzeugseitigen Auswerteeinrichtung (5) detektiert wird, wobei die Bestimmung der Distanz nach der Detektion der Unterbrechung durchgeführt wird.

9. Verfahren nach einem der vorangegangenen Ansprüche, in welchem die Bestimmung der Distanz nur durchgeführt wird, falls eine Signalenergie der Antennensignale größer als ein vorbestimmter Schwellwert ist.

10. Verfahren nach einem der vorangegangenen Ansprüche, in welchem für mehr als eine fahrzeugseitige Empfangseinrichtung (4, 4a, ..., 4x) in Abhängigkeit der von den Antennenelementen (6, 6a, ..., 6n) erzeugten Antennensignale eine empfangseinrichtungsspezifische Signallaufzeit für die Distanz zwischen Fahrzeug (2) und Infrastruktur-Einrichtung (3) bestimmt wird, wobei die empfangseinrichtungsspezifischen Signale der mehreren fahrzeugseitigen Empfangseinrichtungen (4 4a, ..., 4x) in Abhängigkeit der Signallaufzeiten in ein gemeinsames Zeitsystem transformiert werden.

11. Verfahren nach einem der vorangegangenen Ansprüche, in welchem eine fahrzeugseitige Sendeeinrichtung (27) ein Kalibrationssignal erzeugt, wobei mindestens eine fahrzeugseitige Empfangseinrichtung (4, 4a,..., 4x) das Kalibrationssignal empfängt, wobei in Abhängigkeit mindestens einer Signaleigenschaft des von den Antennenelementen (6) der mindestens einen fahrzeugseitigen Empfangseinrichtung (4, 4a,..., 4x) empfangenen Kalibrationssignals für mindestens ein Antennenelement (6) der mindestens einen fahrzeugseitigen Empfangseinrichtung (4, 4a,..., 4x) mindestens ein Signalkorrekturfaktor bestimmt wird, wobei ein Antennensignal oder ein digitalisiertes Antennensignal in Abhängigkeit des mindestens einen Signalkorrekturfaktors korrigiert wird.

12. Vorrichtung zur Bestimmung einer Distanz zwischen einem Fahrzeug (2) und einer Infrastruktur-Einrichtung (3) und ausgebildet zur Durchführung eines Verfahrens gemäß einem der Ansprüche 1 bis 11, wobei die Vorrichtung (1) mindestens zwei fahrzeugseitige Empfangseinrichtungen (4, 4a, ..., 4x) zum Empfang eines Signals der Infrastruktur-Einrichtung (3) umfasst, wobei jede fahrzeugseitige Empfangseinrichtung (4, 4a, ..., 4x) mindestens zwei Antennenelemente (6, 6a, ..., 6n) umfasst, wobei die Vorrichtung (1) mindestens eine fahrzeugseitige Auswerteeinrichtung (5) umfasst, wobei die fahrzeugseitige Auswerteeinrichtung (5) dazu ausgebildet ist, für jede fahrzeugseitige Empfangseinrichtung (4, 4a, ..., 4x) in Abhängigkeit der von den Antennenelementen (6, 6a, ..., 6n) erzeugten Antennensignale eine empfangseinrichtungsspezifische Distanz zwischen Fahrzeug (2) und Infrastruktur-Einrichtung (3) zu bestimmen, **dadurch gekennzeichnet, dass**
als Distanz zwischen dem Fahrzeug (2) und der Infrastruktur-Einrichtung (3) die minimalste Distanz aller empfangseinrichtungsspezifischen Distanzen bestimmt wird, wobei die fahrzeugseitige Empfangseinrichtung (4, 4a, ..., 4x) oder eine weitere Einrichtung detektiert, wenn das von der Infrastruktur-Einrichtung (3) gesendete Signal empfangen wird, wobei die von den Antennenelementen der fahrzeugseitigen Empfangseinrichtung (4, 4a, ..., 4x) erzeugten Antennensignale ab einem Detektionszeitpunkt zumindest zeitweise mit einer ersten Abtastrate digitalisiert werden, wobei ein Signalanfangsabschnitt jedes mit der ersten Abtastrate digitalisierten Antennensignals bestimmt wird, wobei der Signalanfangsabschnitt alle Abtastwerte umfasst, die in einem Zeitintervall vorbestimmter Länge nach dem Detektionszeitpunkt erzeugt wurden, oder wobei der Signalanfangsabschnitt eine vorbestimmte Anzahl von Abtastwerten umfasst, wobei in Abhängigkeit der Signalanfangsabschnitte eine Empfangsrichtung des Signals bestimmt wird.

13. Vorrichtung nach Anspruch 12, in welcher die Antennenelemente (6, 6a, ..., 6n) einer fahrzeugseitigen Empfangseinrichtung (4, 4a, ..., 4x) kreisförmig oder linear angeordnet sind.

14. Vorrichtung nach Anspruch 12 oder 13, in welcher eine fahrzeugseitige Empfangseinrichtung (4, 4a, ..., 4x) mindestens eine A/D-Wandlereinrichtung (9) zur Digitalisierung der von den Antennenelementen (6, 6a, ..., 6n) erzeugten Antennensignale umfasst und/oder die Vorrichtung (1) mindestens eine UHDR-Signalübertragungsleitung (8) umfasst, wobei mindestens eine fahrzeugseitige Empfangseinrichtung (4, 4a, ..., 4x) und die fahrzeugseitige Auswerteeinrichtung (5) über die UHDR-Signalübertragungsleitung (8) signaltechnisch verbunden sind.

15. Fahrzeug mit einer Vorrichtung gemäß einem der Ansprüche 12 bis 14.

## Claims

1. Method for determining a distance between a vehicle (2) and an infrastructure apparatus (3), wherein at least two vehicle-side receiving apparatuses (4, 4a, ..., 4x) receive a signal transmitted by the infrastructure apparatus (3), wherein each vehicle-side receiving apparatus (4, 4a, ..., 4x) comprises at least two antenna elements (6, 6a, ...., 6n), wherein a receiving apparatus-specific distance between the vehicle (2) and the infrastructure apparatus (3) is determined for each vehicle-side receiving apparatus (4, 4a ..., 4x) depending on the antenna signals generated by the antenna elements (6, 6a, ..., 6n) by means of a vehicle-side evaluation apparatus (5),
**characterised in that**
the distance between the vehicle (2) and the infrastructure apparatus (3) is determined as the minimum distance of all receiving apparatus-specific distances, wherein the vehicle-side receiving apparatus (4, 4a, ..., 4x) or a further apparatus detects when the signal transmitted by the infrastructure apparatus (3) is received, wherein the antenna signals generated by the antenna elements (6, 6a, ..., 6n) of the vehicle-side receiving apparatus (4, 4a, ... , 4x) are at least temporarily digitised at a first sampling rate starting from a detection time, wherein a signal start section of each antenna signal digitised at the first sampling rate is determined, wherein the signal start section comprises all sample values which were generated in a time interval of predetermined length after the detection time, or wherein the signal start section comprises a predetermined number of sample values, wherein a receiving direction of the signal is determined depending on the signal start sections.

2. Method according to claim 1, in which the sampling rate is reduced when a predetermined period of time has passed after the start of sampling at the first sampling rate.

3. Method according to claim 1 or 2, in which a receiving apparatus-specific line-of-sight (LOS) signal is determined from the antenna signals of a vehicle-side receiving apparatus (4, 4a, ..., 4x) depending on the receiving direction.

4. Method according to claim 3, in which the receiving apparatus-specific distance is determined depending on the receiving apparatus-specific line-of-sight (LOS) signal.

5. Method according to claim 4, in which a data symbol is extracted from the receiving apparatus-specific line-of-sight (LOS) signal, wherein the receiving apparatus-specific distance is determined depending on the data symbol.

6. Method according to any one of the preceding claims, in which a vehicle speed is determined depending on at least two distances determined one after the other in terms of time.

7. Method according to any one of the preceding claims, in which the antenna signals or the digitised antenna signals are transmitted via a UHDR signal transmission line (8) and/or the antenna signals are digitised for each antenna element (6, 6a, ..., 6n) of a vehicle-side receiving apparatus (4, 4a, ..., 4x) before transmission to the vehicle-side evaluation apparatus (5).

8. Method according to any one of the preceding claims, in which the infrastructure apparatus (3) interrupts the transmission of the signal for a predetermined period of time, wherein the interruption is detected by a vehicle-side evaluation apparatus (5), wherein the determination of the distance is carried out after the detection of the interruption.

9. Method according to any one of the preceding claims, in which the determination of the distance is carried out only if signal energy of the antenna signals is greater than a predetermined threshold value.

10. Method according to any one of the preceding claims, in which, for more than one vehicle-side receiving apparatus (4, 4a, ..., 4x), a receiving apparatus-specific signal propagation time is determined for the distance between the vehicle (2) and the infrastructure apparatus (3) depending on the antenna signals generated by the antenna elements (6, 6a, ... , 6n), wherein the receiving apparatus-specific signals of the plurality of vehicle-side receiving apparatuses (4, 4a, ..., 4x) are transformed into a common time system depending on the signal propagation times.

11. Method according to any one of the preceding claims, in which a vehicle-side transmitting apparatus (27) generates a calibration signal, wherein at least one vehicle-side receiving apparatus (4, 4a,..., 4x) receives the calibration signal, wherein at least one signal correction factor is determined for at least one antenna element (6) of the at least one vehicle-side receiving apparatus (4, 4a,..., 4x) depending on at least one signal characteristic of the calibration signal received by the antenna elements (6) of the at least one vehicle-side receiving apparatus (4, 4a,..., 4x), wherein an antenna signal or a digitised antenna signal is corrected depending on the at least one signal correction factor.

12. Device for determining a distance between a vehicle (2) and an infrastructure apparatus (3), said device being designed to carry out a method according to any one of claims 1 to 11, wherein the device (1) comprises at least two vehicle-side receiving apparatuses (4, 4a, ..., 4x) for receiving a signal from the infrastructure apparatus (3), wherein each vehicle-side receiving apparatus (4, 4a, ..., 4x) comprises at least two antenna elements (6, 6a, ..., 6n), wherein the device (1) comprises at least one vehicle-side evaluation apparatus (5), wherein the vehicle-side evaluation apparatus (5) is designed to determine a receiving apparatus-specific distance between the vehicle (2) and the infrastructure apparatus (3) for each vehicle-side receiving apparatus (4, 4a ..., 4x) depending on the antenna signals generated by the antenna elements (6, 6a, ..., 6n), **characterised in that**
the distance between the vehicle (2) and the infrastructure apparatus (3) is determined as the minimum distance of all receiving apparatus-specific distances, wherein the vehicle-side receiving apparatus (4, 4a, ..., 4x) or a further apparatus detects when the signal transmitted by the infrastructure apparatus (3) is received, wherein the antenna signals generated by the antenna elements of the vehicle-side receiving apparatus (4, 4a, ..., 4x) are at least temporarily digitised at a first sampling rate starting from a detection time, wherein a signal start section of each antenna signal digitised at the first sampling rate is determined, wherein the signal start section comprises all sample values which were generated in a time interval of predetermined length after the detection time, or wherein the signal start section comprises a predetermined number of sample values, wherein a receiving direction of the signal is determined depending on the signal start sections.

13. Device according to claim 12, in which the antenna elements (6, 6a, ..., 6n) of a vehicle-side receiving apparatus (4, 4a, ..., 4x) are arranged in a circular or linear manner.

14. Device according to claim 12 or 13, in which a vehicle-side receiving apparatus (4, 4a, ..., 4x) comprises at least one A/D converter apparatus (9) for digitising the antenna signals generated by the antenna elements (6, 6a, ..., 6n) and/or the device (1) comprises at least one UHDR signal transmission line (8), wherein at least one vehicle-side receiving apparatus (4, 4a, ..., 4x) and the vehicle-side evaluation apparatus (5) are connected via the UHDR signal transmission line (8) for signal communication.

15. Vehicle having a device according to any one of claims 12 to 14.

## Revendications

1. Procédé de détermination d'une distance entre un véhicule (2) et un appareil d'infrastructure (3), dans lequel au moins deux appareils de réception côté véhicule (4, 4a, ..., 4x) reçoivent un signal émis par l'appareil d'infrastructure (3), dans lequel chaque appareil de réception côté véhicule (4, 4a, ..., 4x) comprend au moins deux éléments d'antenne (6, 6a, ..., 6n), dans lequel une distance spécifique à l'appareil de réception est déterminée entre le véhicule (2) et l'appareil d'infrastructure (3) au moyen d'un appareil d'évaluation côté véhicule (5) pour chaque appareil de réception côté véhicule (4, 4a, ..., 4x) en fonction des signaux d'antenne produits par les éléments d'antenne (6, 6a, ..., 6n),
**caractérisé en ce que**
la distance minimale parmi toutes les distances spécifiques à l'appareil de réception est déterminée comme distance entre le véhicule (2) et l'appareil d'infrastructure (3), dans lequel l'appareil de réception côté véhicule (4, 4a, ..., 4x) ou un autre appareil est détecté, lorsque le signal émis par l'appareil d'infrastructure (3) est reçu, dans lequel les signaux d'antenne produits par les éléments d'antenne (6, 6a, ..., 6n) de l'appareil de réception côté véhicule (4, 4a, ..., 4x) sont numérisés au moins partiellement avec un premier taux d'échantillonnage à partir d'un moment de détection, dans lequel une section de début de signal de chaque signal d'antenne numérisé avec le premier taux d'échantillonnage est déterminée, dans lequel la section de début de signal comprend toutes les valeurs d'échantillonnage qui ont été produites dans un intervalle de temps de longueur prédéterminée après le moment de détection, ou dans lequel la section de début de signal comprend un nombre prédéterminé de valeurs d'échantillonnage, dans lequel une direction de réception du signal est déterminée en fonction des sections de début de signal.

2. Procédé selon la revendication 1, dans lequel le taux d'échantillonnage est réduit lorsqu'une durée prédéterminée s'est écoulée après le début de l'échantillonnage avec le premier taux d'échantillonnage.

3. Procédé selon la revendication 1 ou 2, dans lequel un signal par ligne de visée (LOS) spécifique à l'appareil de réception est déterminé à partir des signaux d'antenne d'un appareil de réception côté véhicule (4, 4a, ..., 4x) en fonction de la direction de réception.

4. Procédé selon la revendication 3, dans lequel la distance spécifique à l'appareil de réception est déterminée en fonction du signal par ligne de visée (LOS) spécifique à l'appareil de réception.

5. Procédé selon la revendication 4, dans lequel un symbole de données est extrait à partir du signal par ligne de visée (LOS) spécifique à l'appareil de réception, dans lequel la distance spécifique à l'appareil de réception est déterminée en fonction du symbole de données.

6. Procédé selon l'une quelconque des revendications précédentes, dans lequel une vitesse de véhicule est déterminée en fonction d'au moins deux distances déterminées successivement dans le temps.

7. Procédé selon l'une quelconque des revendications précédentes, dans lequel les signaux d'antenne ou les signaux d'antenne numérisés sont transmis par le biais d'une ligne de transmission de signal UHDR (8) et/ou les signaux d'antenne sont numérisés pour chaque élément d'antenne (6, 6a, ..., 6n) d'un appareil de réception côté véhicule (4, 4a, ..., 4x) avant une transmission à l'appareil d'évaluation côté véhicule (5).

8. Procédé selon l'une quelconque des revendications précédentes, dans lequel l'appareil d'infrastructure (3) interrompt l'émission du signal pendant une durée prédéterminée, dans lequel l'interruption est détectée par un appareil d'évaluation côté véhicule (5), dans lequel la détermination de la distance est réalisée après la détection de l'interruption.

9. Procédé selon l'une quelconque des revendications précédentes, dans lequel la détermination de la distance est réalisée uniquement dans le cas où une énergie de signal des signaux d'antenne est supérieure à une valeur seuil prédéterminée.

10. Procédé selon l'une quelconque des revendications précédentes, dans lequel un temps de propagation de signal spécifique à l'appareil de réception est déterminé pour la distance entre le véhicule (2) et l'appareil d'infrastructure (3) pour plus d'un appareil de réception côté véhicule (4, 4a, ..., 4x) en fonction des signaux d'antenne produits par les éléments d'antenne (6, 6a, ..., 6n), dans lequel les signaux spécifiques à l'appareil de réception de la pluralité d'appareils de réception côté véhicule (4, 4a, ..., 4x) sont transformés en fonction des temps de propagation de signal dans un système de temps commun.

11. Procédé selon l'une quelconque des revendications précédentes, dans lequel un appareil d'émission côté véhicule (27) produit un signal d'étalonnage, dans lequel au moins un appareil de réception côté véhicule (4, 4a, ..., 4x) reçoit le signal d'étalonnage, dans lequel au moins un facteur de correction de signal est déterminé en fonction d'au moins une caractéristique de signal du signal d'étalonnage reçu par les éléments d'antenne (6) de l'au moins un appareil de réception côté véhicule (4, 4a, ..., 4x) pour au moins un élément d'antenne (6) de l'au moins un appareil de réception côté véhicule (4, 4a, ..., 4x), dans lequel un signal d'antenne ou un signal d'antenne numérisé est corrigé en fonction de l'au moins un facteur de correction de signal.

12. Dispositif de détermination d'une distance entre un véhicule (2) et un appareil d'infrastructure (3) et conçu pour la réalisation d'un procédé selon l'une quelconque des revendications 1 à 11, dans lequel le dispositif (1) comprend au moins deux appareils de réception côté véhicule (4, 4a, ..., 4x) pour la réception d'un signal de l'appareil d'infrastructure (3), dans lequel chaque appareil de réception côté véhicule (4, 4a, ..., 4x) comprend au moins deux éléments d'antenne (6, 6a, ..., 6n), dans lequel le dispositif (1) comprend au moins un appareil d'évaluation côté véhicule (5), dans lequel l'appareil d'évaluation côté véhicule (5) est conçu pour déterminer une distance spécifique à l'appareil de réception entre le véhicule (2) et l'appareil d'infrastructure (3) pour chaque appareil de réception côté véhicule (4, 4a, ..., 4x) en fonction des signaux d'antenne produits par les éléments d'antenne (6, 6a, ..., 6n), **caractérisé en ce que**
la distance minimale parmi toutes les distances spécifiques à l'appareil de réception est déterminée comme distance entre le véhicule (2) et l'appareil d'infrastructure (3), dans lequel l'appareil de réception côté véhicule (4, 4a, ..., 4x) ou un autre appareil est détecté, lorsque le signal émis par l'appareil d'infrastructure (3) est reçu, dans lequel les signaux d'antenne produits par les éléments d'antenne de l'appareil de réception côté véhicule (4, 4a, ..., 4x) sont numérisés au moins partiellement avec un premier taux d'échantillonnage à partir d'un moment de détection, dans lequel une section de début de signal de chaque signal d'antenne numérisé avec le premier taux d'échantillonnage est déterminée, dans lequel la section de début de signal comprend toutes les valeurs d'échantillonnage qui ont été produites dans un intervalle de temps de longueur prédéterminée après le moment de détection, ou dans lequel la section de début de signal comprend un nombre prédéterminé de valeurs d'échantillonnage, dans lequel une direction de réception du signal est déterminée en fonction des sections de début de signal.

13. Dispositif selon la revendication 12, dans lequel les éléments d'antenne (6, 6a, ..., 6n) d'un appareil de réception côté véhicule (4, 4a, ..., 4x) sont disposés de manière circulaire ou linéaire.

14. Dispositif selon la revendication 12 ou 13, dans lequel un appareil de réception côté véhicule (4, 4a, ..., 4x) comprend au moins un appareil convertisseur A/D (9) pour la numérisation des signaux d'antenne produits par les éléments d'antenne (6, 6a, ..., 6n) et/ou le dispositif (1) comprend au moins une ligne de transmission de signal UHDR (8), dans lequel au moins un appareil de réception côté véhicule (4, 4a, ..., 4x) et l'appareil d'évaluation côté véhicule (5) sont reliés par signal par le biais de la ligne de transmission de signal UHDR (8).

15. Véhicule avec un dispositif selon l'une quelconque des revendications 12 à 14.
